# EUROPEAN PATENT APPLICATION

(11) **EP 1 083 686 A2**
(43) Date of publication of application: **14.03.2001**
(21) Application number: 00302764.6
(22) Date of filing: 31.03.2000
(51) Int. Cl.: H04H 9/00, H04H 1/00

(54) **System for providing interactive entertainment services to an audience using a communications network**

(30) Priority: 10.09.1999 US 393799
(71) Applicant: Psuedo Programs, Inc., New York, New York 10012 (US)
(72) Inventor: Fortuna, Joseph A., Jr., Brooklyn, New York 11238 (US)
(74) Representative: Cross, Rupert Edward Blount

(57) **Abstract**

An operating system for providing entertainment services on the global communications network (e.g., the world wide web). The operating system includes one or more administrative servers for controlling the production and management of an interactive entertainment presentation consisting of streaming media content and ancillary (flat content) elements. The streaming media presentation generally consists of audio and/or video content.

## Description

The present invention relates to systems and methods relating to entertainment services. In particular, but not exclusively the present invention relates to an operating system that combines productions, editing, file serving and business utilities for managing and creating entertainment for a global communications network (e.g., the Internet). Embodiments provide tools to manage various aspects of producing streaming media content online, including chat management, site membership, message board operations, flat content editing, media file archival management, management of media file delivery, traffic management and reporting, dynamic insertion of advertisement, personnel management, cross-site content distribution and management, 24-hour content scheduling, project tracking and management, and channel-level and show-level production and management.

### BACKGROUND OF THE INVENTION

Preferred embodiments for providing entertainment over the global communications network (or the world wide web) are similar to the conventional television or cable systems. Generally entertainment is providing by displaying on a web site streaming images from a video camera or pre-recorded audio and video images, such as an episode or segment of a television show, a movie and the like. The viewer/consumer is generally not given the opportunity to interact with the presentation of the show. For example, during the presentation of a talk show, the viewer may not engage in discussions with the talk show host, guests on the show, and other viewers. In other words, the viewer is merely a passive observer of the entertainment. Accordingly, it is desirable to have a communications network based entertainment system that permits the viewer to be an active participant of the show being provided on the network.

Another drawback of the conventional entertainment system is that it does not provide adequate mechanisms or tools for "on-the-fly" changes to the content being delivered, nor does it provide for the management of production of streaming media presentation (i.e., shows and programs) and the subsequent management of the resultant streaming media files.

A further drawback of the conventional entertainment system is that it does not allow complimentary or "ancillary" content to be created and presented to the viewer in concert with the streaming media presentation.

Yet another drawback of the conventional entertainment system is that only employees or production team members associated with the content or system provider may produce the streaming media presentation. In other words, the viewer is denied access to the "back stage," where the streaming media presentations are created and produced. Therefore, it is desirable to have a communications network based entertainment system that provides mechanisms and tools to permit the viewer to create, produce and modify his or her own streaming media presentation and/or ancillary content.

### SUMMARY OF THE INVENTION

It would be desirable to provide a communications network based entertainment system for editing and managing the production of streaming media presentations.

It would also be desirable to provide an entertainment system that permits "ancillary" or accompanying content to be presented to the user in concert with the streaming media presentation.

It would also be desirable to provide an entertainment system, which is capable of supporting multiple channels or streams of media presentation.

It would also be desirable to provide an entertainment system that permits the viewer to be an active participant in the streaming media presentation.

It would also be desirable to provide an entertainment system that permits the viewer to produce and edit his or her own streaming media presentation and/or ancillary content.

It would also be desirable to provide an entertainment system, which is capable of supporting dynamic insertion of advertisements into the streaming media presentation in accordance with criteria specified by an advertiser.

In accordance with this invention, a communications network-based interactive entertainment system is comprised of transmission means for delivering a live media presentation to the audience over the communications network and receiving means for receiving communications from the audience over the communications network while the live media presentation is being delivered to the audience, whereby at least some of the communications received from the audience during the live media presentation are used to determine the content of the live media presentation.

In accordance with an aspect of this invention, a system for remotely providing entertainment production services to independent producers over a global communications network is comprised of one or more accessible servers, an encoder for transmitting the files associated with a show to an audience, access control software for providing a plurality of access levels to a multiple software tools resident on one or more servers for creating and presenting media content, some of the access levels being accessible by the independent producers. The software tools remotely accessible to the independent producers include at least one tool for manipulating files resident on at least of the servers containing media content for use in a show being produced for presentation to an audience over the communications network and at least one tool for scheduling the presentation of shows.

In accordance with another aspect of this invention, a system for presenting entertainment over a communications network is comprised of a computer linked to the communications network for transmitting streaming media presentations to an audience, a database for maintaining information about the audience receiving the streaming media presentations, and a software tool for maintaining a plurality of advertisements to be inserted into the streaming media presentations transmitted by the computer and for maintaining a set of audience selection criteria associated with at least some of the advertisement. The system also includes a software tool for selecting and inserting advertisements into the streaming media presentations, at least some of the advertisements being selected for insertion based on the audience selection criteria.

In accordance with yet another aspect of this invention, a communications network-based entertainment system is comprised of one or more servers for controlling the production and management of an entertainment presentation consisting of a streaming media presentation and ancillary content (e.g., "flat" content such as textual, static images and the like), for managing a database for indexing all content types and storing ancillary content, for archiving and delivering the streaming media presentation and for retrieving the flat content from the database. In a presently preferred embodiment, three servers are used: an administrative server, a media server and a flat content server.

In accordance with still another aspect of this invention, the streaming media presentation comprises a plurality of shows consisting of program segments and advertising blocks. The program segments may consist of audio and/or video portions. Each show may include a chat group, wherein members of the chat group may interact with the show on a real-time basis. Also, a chat member may post/send messages to other chat members, show hosts and guests of the show. Each show may also be accompanied by an assortment of flat content, such as user polls, rotating images, pertinent articles, linkable HTML-based articles, and the like.

In accordance with another embodiment of the present invention, a communication network based entertainment system composes an administrative server for controlling the production and management of a plurality of entertainment presentations, each entertainment presentation consisting of streaming media presentation and ancillary content, a database for indexing all content types, at least one media server for archiving and delivering the streaming media presentation from the database and at least one flat content server for retrieving the flat content from the database.

### BRIEF DESCRIPTION OF THE DRAWINGS

Embodiments of the invention will now be described, by way of example only, and with reference to the accompanying drawings, of which:
Fig. 1 is a screen image of a login window of a "web" site utilizing the present invention displayed on a commercial network browser;
Fig. 2 is a screen image of a channel creation tool;
Fig. 3 is a screen image of a main user management tool;

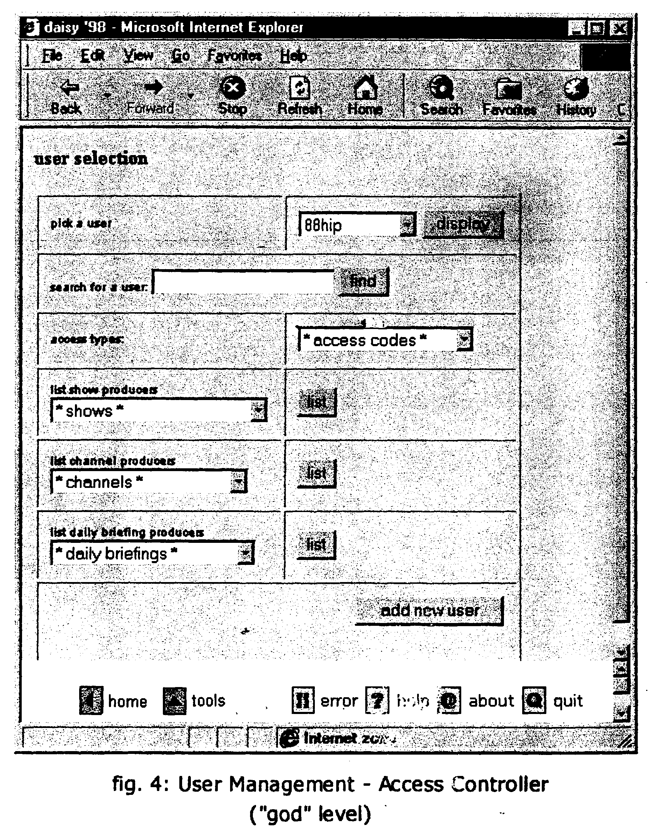

Fig. 4 is a screen image of an access controller;
Fig. 5 is a screen image of an information editing tool;
Fig. 6 is a screen image of a tool for viewing who is online;
Fig. 7 is a screen image of a bug reporting tool;
Fig. 8 is a screen image of a tool for logging as an alias;
Fig. 9 is a screen image of a tool for setting/editing message of the day;
Fig. 10 is a screen image of a tool for viewing affiliate info;
Fig. 11 is a screen image of affiliate emailer;
Fig. 12 is a screen image of a tool for viewing affiliate status and description;
Fig. 13 is a screen image of a tier 2 distribution tool;
Fig. 14 is a screen image of a traffic reporting tool;
Fig. 15 is a screen image of a loglite menu tool;
Fig. 16 is a screen image of a change registry file tool;
Fig. 17 is a screen image of a change log date tool;
Fig. 18 is a screen image of a change log file name tool;
Fig. 19 is a screen image of a loglite editorial tool;
Fig. 20 is a screen image of a menu of audio/video control tools;
Fig. 21 is a screen image of a stop show tool;
Fig. 22 is a screen image of a start show tool;
Fig. 23 is a screen image of an advertising break tool;
Fig. 24 is a screen image of a channel overview tool;
Fig. 25 is a screen image of a log viewer tool;
Fig. 26 is a screen image of a community administration menu;
Fig. 27 is a screen image of a database access menu;
Fig. 28 is a screen image of a chat profile editorial tool;
Fig. 29 is a screen image of a chat personality editorial tool;
Fig. 30 is a screen image of a message boards editorial tool;
Fig. 31 is a screen image of a channel producer menu;
Fig. 32 is a screen image of an add show tool;
Fig. 33 is a screen image of a channel sections tool;
Fig. 34 is a screen image of a channel highlights tool;
Fig. 35 is a screen image of a daily briefing tool;
Fig. 36 is a screen image of a channel block scheduler;
Fig. 37 is a screen image of a show producer menu;
Fig. 38 is a screen image of a show sections tool;
Fig. 39 is a screen image of an archive editing tool;
Fig. 40 is a screen image of a show message board editorial tool;
Fig. 41 is a screen image of a show rundown tool;
Fig. 42 is a screen image of a playlist tool;
Fig. 43 is a screen image of a project management menu;
Fig. 44 is a screen image of a project selector;
Fig. 45 is a screen image of a project work type editor;
Fig. 46 is a screen image of a project queue;
Fig. 47 is a screen image of a schedule viewer;
Fig. 48 is a screen image of an advertising management tool;
Fig. 49 is a screen image of an advertising sales tool;
Fig. 50 is a screen image of project details;
Fig. 51 is a block diagram illustrating an embodiment of the present invention incorporated into the world wide web (Internet);
Fig. 52 is a flow chart illustrating the process of adding a user or updating user's access by the system administrator;
Fig. 53 is a flow chart illustrating the process of starting and stopping a show by the engineer;
Fig. 54 is a flow chart illustrating the process of adding, editing and deleting an archive by the show or channel producer;
Fig. 55 is a flow chart illustrating the process of scheduling a show by the channel producer;
Fig. 56 is a flow chart illustrating the process entering advertising information and scheduling advertisements within the streaming media;
Fig. 57 is a screen image of a poll creation tool;
Fig. 58 is a screen image of a true or false query tool;
Fig. 59 is a screen image of a poll editing tool;
Fig. 60 is a screen image of a poll queue tool;
Fig. 61 is a screen image of a presentation main menu; and
Fig. 62 is a screen image of a presentation creation/editorial tool.

### DETAILED DESCRIPTION OF PREFERRED EMBODIMENTS

The present invention is readily implemented by presently available communication apparatuses, electronic components and computer languages, such as C, C++, Java, JavaScript, Visual Basic ("VB"), VBScript or the like. The invention finds ready application in various types of existing communication systems, including but not limited to the Internet, extranets, private or public networks, cable networks, satellite networks and broadcast networks. In a preferred embodiment, the present invention is an extranet-style operating system incorporating editing, production, file management, and business utilities designed to manage and facilitate the process of providing entertainment services on the world wide web (Internet).

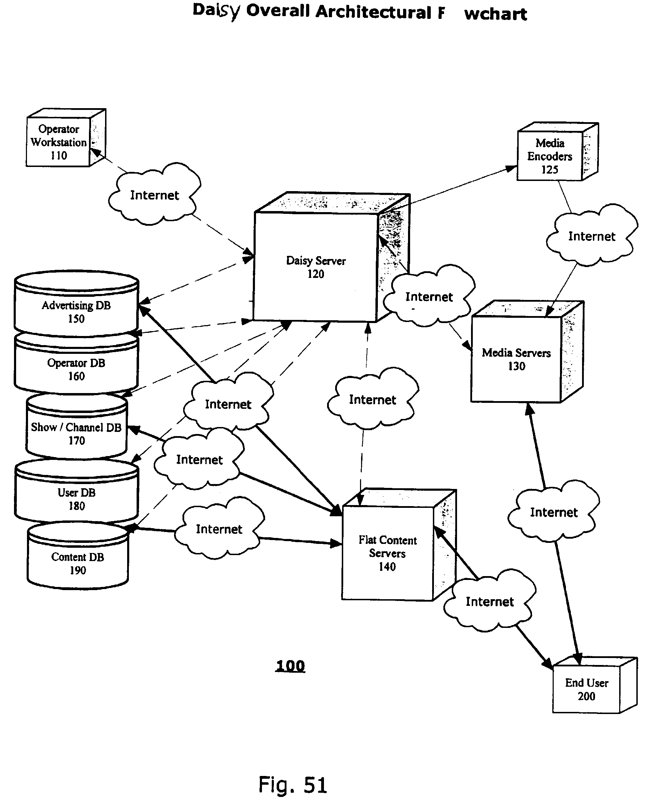

Turning now to Fig. 51 there is illustrated a block diagram of a communication network. At least one administrative server 120 is connected to one or more media encoders 125 for encoding and decoding streaming media content or presentation (such as video, audio and the like), an advertising database 150 containing a plurality of advertisements, an operator database 160 containing profile information on all authorized operators of the system, a show/channel database 170 containing channel and show information (such as-show description, affiliates associated with the show and the like), a user database 180 containing end user profile information and a content database 190 containing the flat content of all the shows. The administrative server 120 is also connected to one or more media servers 130 containing the streaming media files, flat content servers 140 and operator workstations (terminals) 110. The connections between the various servers may be direct or remote, such as over the world wide web (Internet). The flat content server 140 is additionally connected to the advertising database 150, the show/channel database 170 and content database 190. Again, such connection may be via the Internet. Also, the media encoders 125 are connected to the media servers 130. While separate administrative, media and flat content servers are depicted in Fig. 51, those skilled in the art will appreciate that some or all of these functions could be combined in a single server. Likewise, one or more of these servers can also function as operator workstation.

There are essentially two types of access: an operator may access the system 100 from the operator workstation 110 using an access control software to manage various aspects of producing and managing streaming media presentations online, and an end user 200 may access the system 100 using a terminal (not shown) to view these streaming media presentations, and interact (or communicate) with such presentations on a real-time basis, participate in surveys and chat groups associated with a particular show or channel and the like. Preferably, some of the communications received from the audience during the streaming media presentation are used to determined the content of the media presentation and are displayed in an ancillary message display to members of the audience. The various aspects of producing and managing streaming media presentation online may include chat management, site membership, message board operations, flat content editing, media file archival management, management of media file delivery, traffic management and reporting, dynamic insertion of advertisement, personnel management, cross-site content distribution and management, 24-hour content scheduling, project tracking and management, channel-level and show-level production and management, and the like.

End users 200 may access the system 100 by entering a uniform resource locator ("URL") of a web site incorporating the present invention, such as "http://www.pseudo.com," or an affiliate web site to independently view and/or listen to live or archived shows, i.e., streaming media presentations. The web site may support various channels, each channel capable of broadcasting a plurality of shows continuously, comparable to TV network channels. The end user 200 may receive the streaming media presentation consisting of audio and/or video from the media servers 130, and the accompanying flat content (such as textual, static images and the like), from the flat content servers 140.

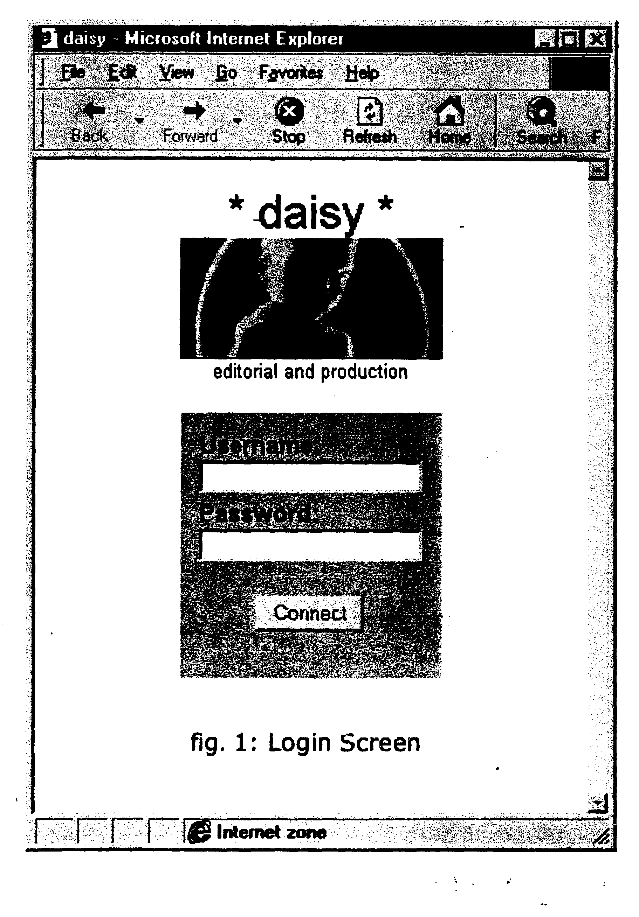

An operator on the operator workstation 110 using the access control software to access the system 100 by logging onto an administrative server 120. As noted, such access can be remote, such as over a global communications network (e.g., the Internet). The operator is presented with a login screen, as shown in Fig. 1, wherein the operator must provide a valid username and password to initiate a connection between the operator workstation 110 and the administrative server 120. The administrative server 120 verifies whether the operator is an authorized operator or user of the system 100 by determining whether the username/password information provided by the operator is present in the operator database 160. Any end user 200 may register with the system provider to become an operator of the system. Preferably, the end user 200 registers online using a self-enrollment tool available on the system provider's web site to become an operator. The operator database 160 contains profile information for each authorized operator, such as the operator's name, address, telephone number, email address, level of access and the like. The profile information may also contain statistical information about the operator (such as number of system access, tools utilized, length of access, preferences and the like) collected by the administrative server 120.

Upon authorization, the operator workstation is connected to the administrative server 120 and the operator is presented with a menu of tools depending on the operator's level of access, access type or access class. The menu of tools comprises system administration tools, affiliate tools, traffic tools, engineer tools, community administration tools, channel producer tools, show producer tools, daily briefing tools, project browsing tools, project management tools, supervisor tools, presentation tools, ancillary content creation tools, advertising sales and management tools and the like. It is appreciated that the entire set of tools may be presented only to an operator with the highest level of access, such as a system administrator. The tool availability may depend on the operator's profile or duties (e.g., a channel producer having access to the channel producer tools, an affiliate manager having access to the affiliate tools, an engineer having access to the engineer tools, etc.). Also, it is appreciated that a list of tools available to a particular operator may be customized depending on the needs or duties of that particular operator. For example, a certain operator may have access to the entire set of the engineer tools and only a portion of the set of traffic tools.

### System Administration Tools

A system administrator may login to the system 100 using the login screen of Fig. 1 to access all of the tools available in the system. For simplicity, in this section, we will discuss only those tools that are available to a system administrator, specifically the system administration tools, and discuss the remaining tools in their respective sections below.

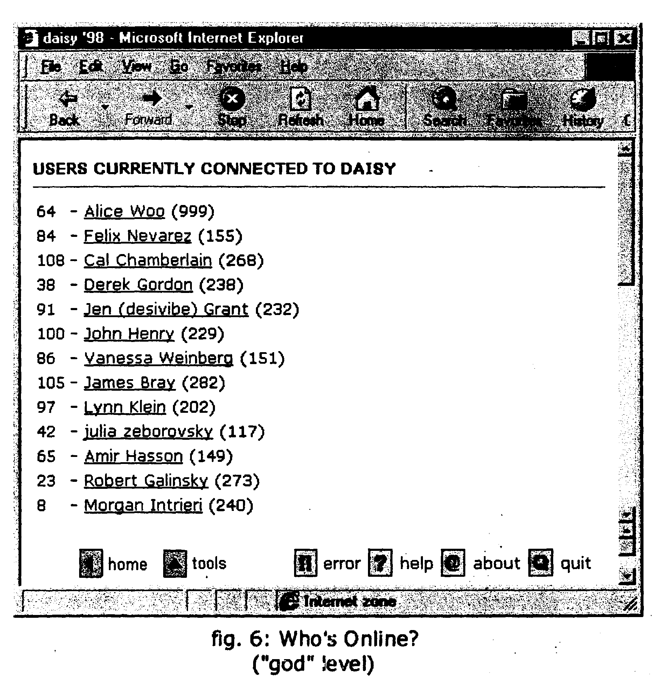

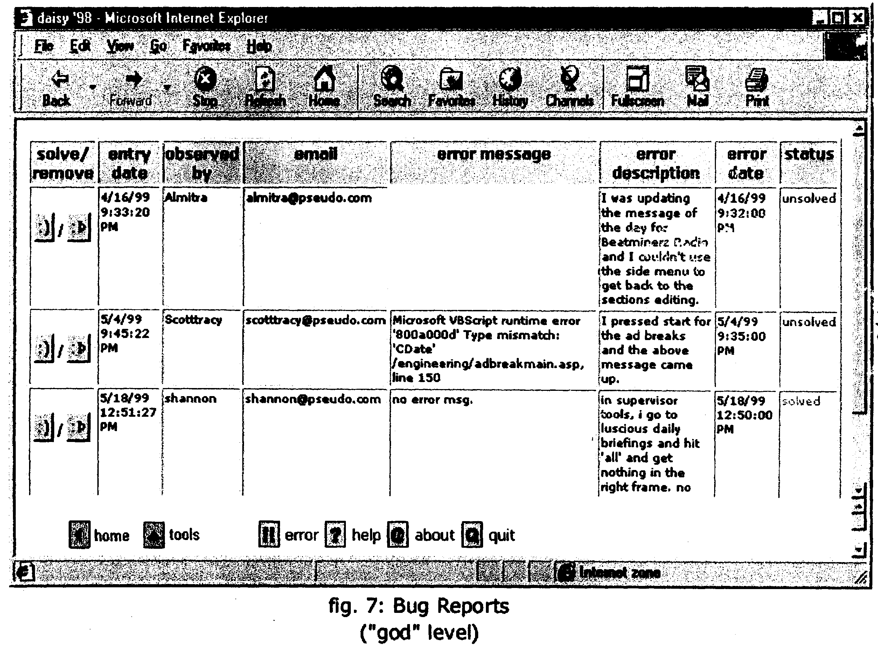

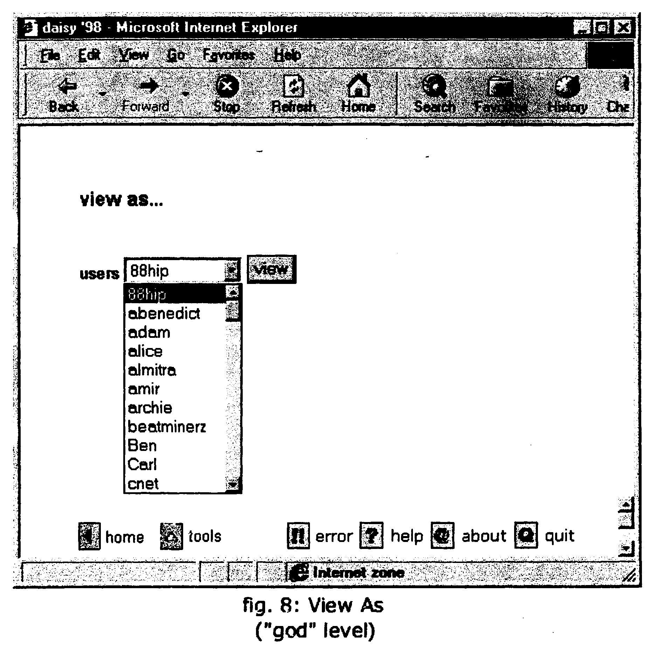

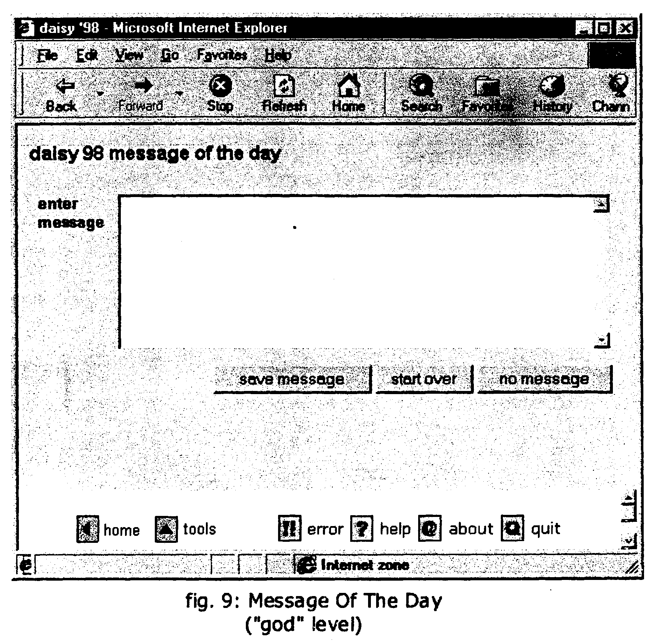

The system administration tools include an "operator management" tool for adding, updating or removing an operator, a "channel creation" tool for creating or editing a channel, a tool for viewing all-operators who are currently logged onto the system (as shown in Fig. 6), a bug reporting tool for viewing error reports (as shown in Fig. 7), a tool for setting/editing the message of the day ("MOTD") (as shown in Fig. 9), a tool for logging onto the system under an alias (i.e., an account of another operator as shown in Fig. 8), and the like.

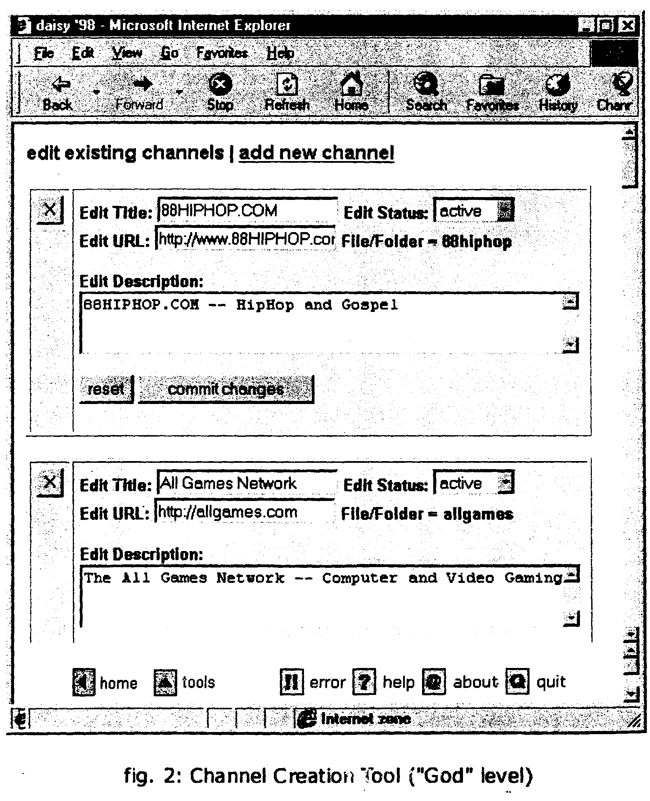

The system administrator can use the channel creation tool to edit an existing channel or create a new channel. As shown in Fig. 2, the system administrator can select an existing channel to edit the title, to edit the homepage reference and description of the channel, and/or to activate/deactivate the channel.

Errors within the system are reported by any operator using the error reporting tool. It is appreciated that each tool, such as the channel creation tool of Fig. 2, has an error reporting icon for reporting or logging errors/bugs. In the preferred embodiment, the error reporting tool requests the submitter to provide information such as his or her name, telephone number, email address, date and time the error was observed, error message, description of the error and the like. The system administrator may then view these reported errors using the bug reporting tool. As shown in Fig. 7, the system administrator may use the bug reporting tool to view the reported bugs/errors along with their current status. The bug reporting tool also provides information relating to the error and the submitter.

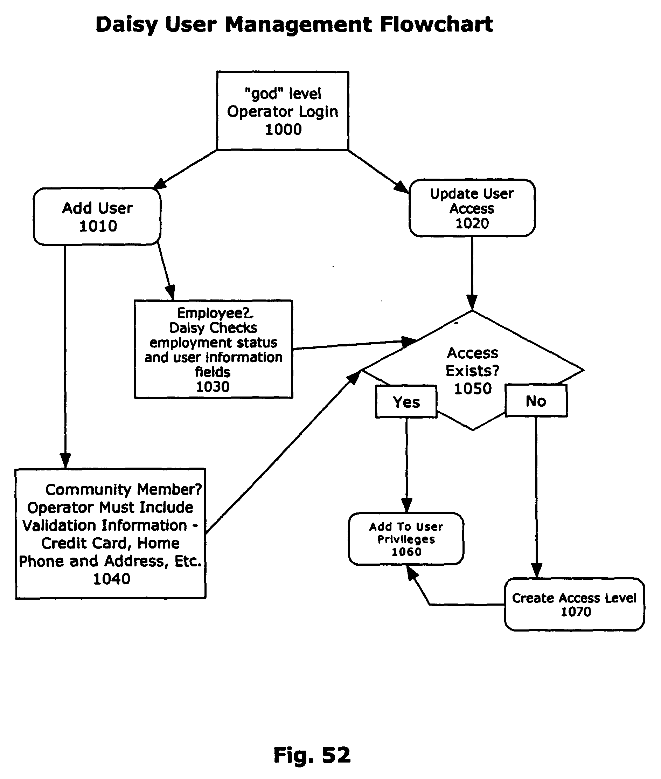

The process of adding an operator/user and updating the operator's access to the system will be described in conjunction with the flow chart of Fig. 52. Users or viewers may register with the system administrator to become operators of the system. In accordance with the present invention, qualified users include individual, such as show producers, channel producers and the like. An end user may apply (or register) at the system's web site using the self-enrollment tool to obtain authorization to become an operator. The end user 200 provides (or selects) new user or profile information, such as demographic information (e.g., name, email address, home address, age, etc.), password, access type, show and channel access, and the like.

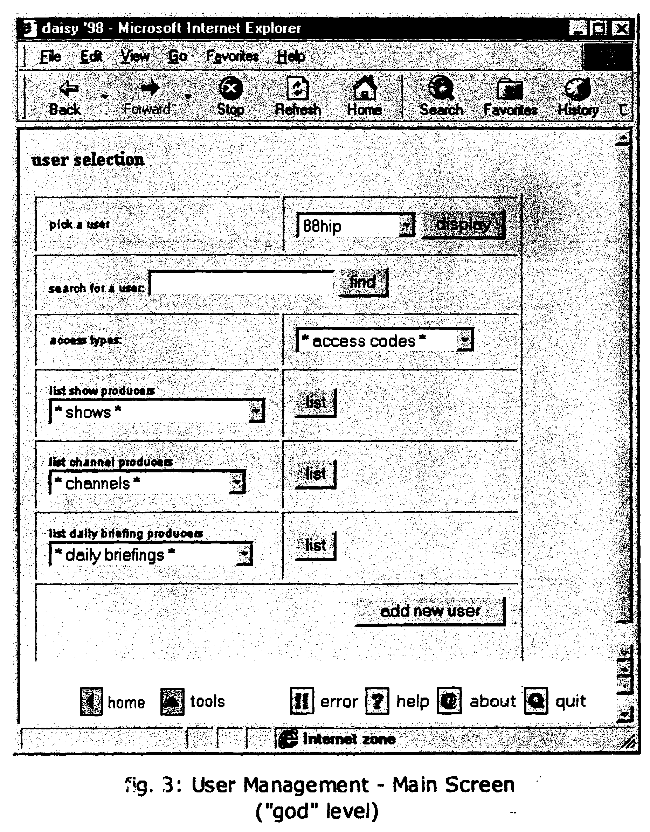

After successfully logging in as a system administrator using the login screen of Fig. 1 at step 1000, the system administrator accesses the main user management screen of Fig. 3. The system administrator may then add a new operator/user or to edit information regarding an existing operator.

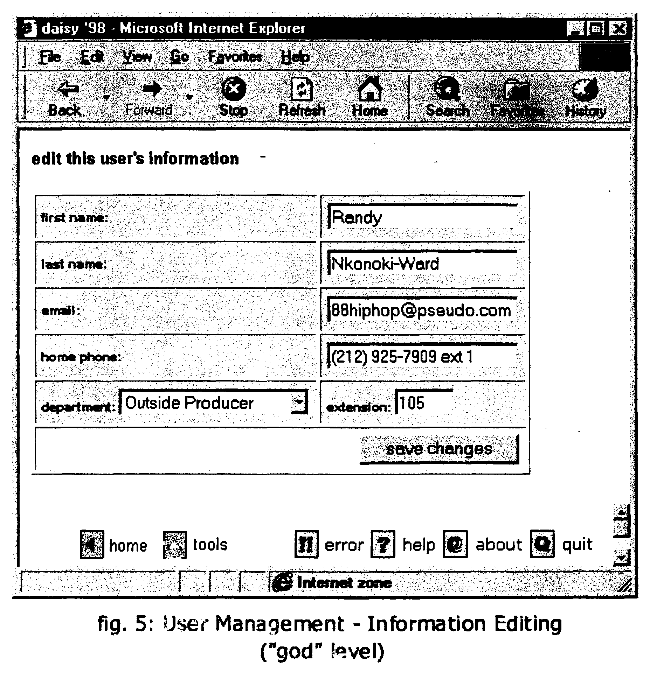

To update or edit user information, the system administrator selects an existing operator/user and clicks the "display" button, such as "88hip," from the main user management screen. The system administrator may change/update the selected operator's profile information, such as access type, access to shows and channels, demographic information, as shown in Fig. 5. It is appreciated that the operator's profile information may be updated automatically and periodically with statistical information (such as, operator's preferences, shows viewed and the like) collected by the administrative server 120 (Fig. 51).

At step 1020, the system administrator selects the new access type for the selected operator from a list of currently available access types or creates a new access type. If the access type selected by the system administrator currently exists, then the system administrator updates and stores the profile information of the selected operator in the operator database 160 at step 1060. However, if the selected access type does not exist, then the system administrator creates a new access type at step 1070 and updates/stores the profile information of the selected operator at step 1060.

Returning to step 1000, the system administrator may select the "add new user" function to add a new user to the system. The system administrator is then prompted to enter new user or profile information provided by the applicant, such as an end user 200, at step 1010. An end user may apply (or register) at the system's web site using the self-enrollment tool to obtain authorization to become an operator The new user may be given access to the system at the discretion of the system administrator in exchange for permitting the system provider to collect statistical information about the new user, such as shows viewed, memberships in chat groups, web sites visited, preferences and the like. The administrative server 120 stores the profile information about the new operator in the operator database 160 and determines if the new operator is associated with the system provider.

If the new operator is associated with the system provider (e.g., the new operator is an employee of such provider), the administrative server 120 ascertains the employment status of the new operator and verifies the information provided regarding the new operator at step 1030 and determines if the access type selected for the new user currently exists at step 1050, as discussed hereinabove.

However, if the new operator is determined to be a non-employee, such as a community member or end user, then the operator is requested to provide additional validation (or verification) information, such as credit card information, address and the like, at step 1040. For example, the verification information may be used to determine that the operator is not a minor and may participate/join in "adults only" chat groups. Additionally, if the operator seeks to register as a channel producer, show producer, community manager, project manager or the like, then the operator may be requested to provide additional information relating to the operator's work experience and qualifications. The operator may be required to pay a registration fee which may depend on the operator's access type. After all of the information provided by the operator is stored in the operator database 160, the administrative server 120 then determines if the access type selected for the new user currently exists at step 1050, as previously discussed.

### Affiliate Tools

An operator having an appropriate level of access, such as an affiliates manager, may access the "affiliate tools." In one embodiment of the present invention, the affiliate tools include a "view affiliate info" tool, an affiliate emailer, a "show status and description" tool, a "send mass mailing" tool, and a "tier 2 distribution" tool. The affiliate tools are used to register and manage affiliates and communicate with second tier (tier 2) partners. Only authorized or registered affiliates are permitted to broadcast shows, i.e., streaming media presentation, from their web sites. It is appreciated that the affiliate web sites are not hyper-linked in a traditional sense such that the visitors (i.e., viewers) of an affiliate web site are not transported to a system provider's web site (such as "http://www.pseudo.com") to view the shows. The viewers on the affiliate web site may view the shows without leaving the affiliate's web site.

Any web site owner may apply to be an affiliate by completing an online form available on the system provider's web site or by other comparable means. Generally, the affiliate application requests the applicant to provide information, such as the name of the site owner, a description of the web site's content, the number of visitors or hits per month, etc. The applicant further identifies the shows to be broadcasted from the affiliated web site.

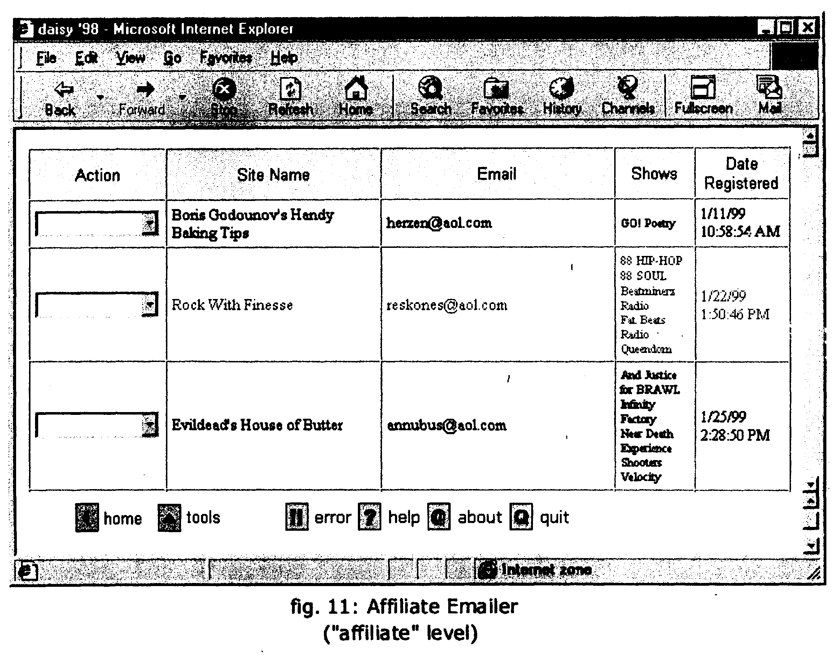

The completed affiliate application is then reviewed by the affiliates manager. The affiliates manager may use the affiliate emailer, as shown in Fig. 11, to visit the applicant's web site to determine its content, layout and the like. Instead of determining and typing the URL of the applicant's web site, the affiliates manager may simply rely on the affiliate emailer to locate and visit the applicant's web site. Although not shown, a pull down menu in the column labeled "Action" permits the affiliates manager to view the affiliate's web site, to send email messages to the affiliates, to view affiliate information, and to delete an affiliate's record.

Once an applicant is approved to be an authorized affiliate, the system records affiliate information, such as an affiliate key, an affiliate ID, a registration date, etc., related to the affiliate. This affiliate information along with the information contained in the affiliate application are stored in the operator database 160 as an affiliate profile record. The affiliate profile records may be indexed by fields, such as the affiliate key, affiliate ID, registration date, site owner and the like.

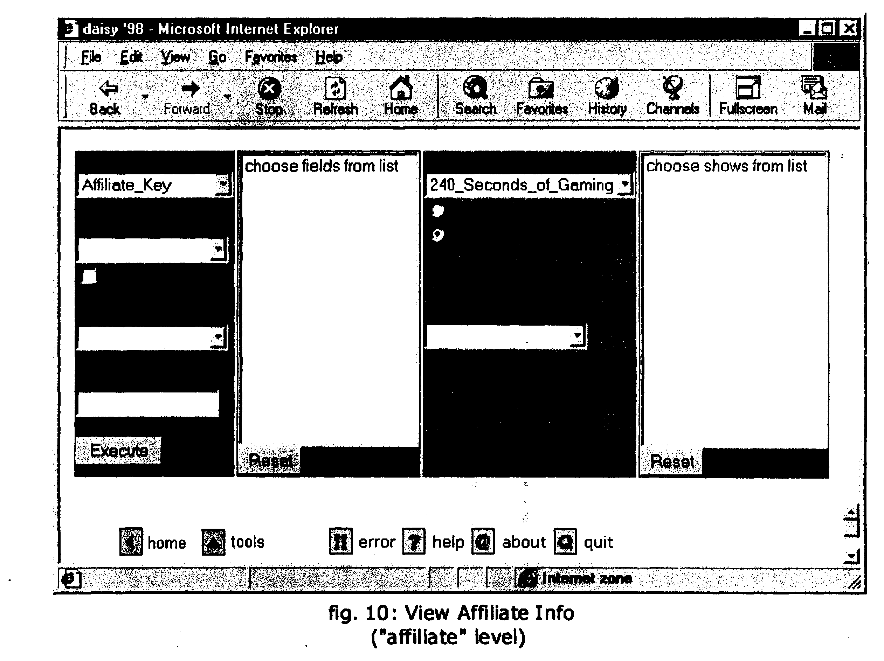

Information contained in the affiliate profile record may be retrieved and viewed by the affiliates manager using the view affiliate tool, as shown in Fig. 10. The view affiliate tool searches and displays the affiliate profile records stored in the operator database 160 based on a searching parameter(s), such as a word or a string of words, specified by the affiliates manager. The affiliates manager may limit the search to a particular field of the affiliate profile record. For example, the affiliates manager may request a list of all affiliates carrying a particular show(s). In addition, the affiliates manager may customize the display of the search results. That is, instead of displaying all of the affiliate profile records satisfying the search parameter, the view affiliate tool may display only the fields and in the order specified by the affiliate manager.

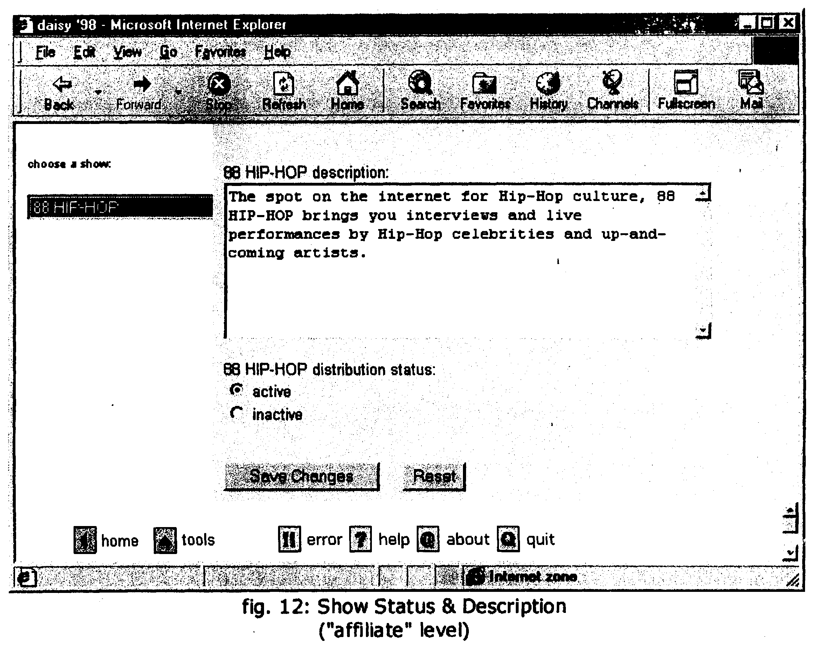

A show cannot be selected unless it is made available for distribution to the affiliates by the affiliates manager, i.e., someone with access to the affiliate tools. As shown in Fig. 12, the affiliates manager uses the show status and description tool to set and edit the distribution status of a show, such as active or inactive. Also, the affiliate manager uses the show status and description tool to provide a brief description of a show to the affiliates.

An authorized affiliate cannot present its selected shows on its web site until it receives appropriate show code, preferably HTML code, for the selected shows from the affiliates manager. The show code may be transmitted to the appropriate affiliates via email using the affiliate emailer or by other comparable means.

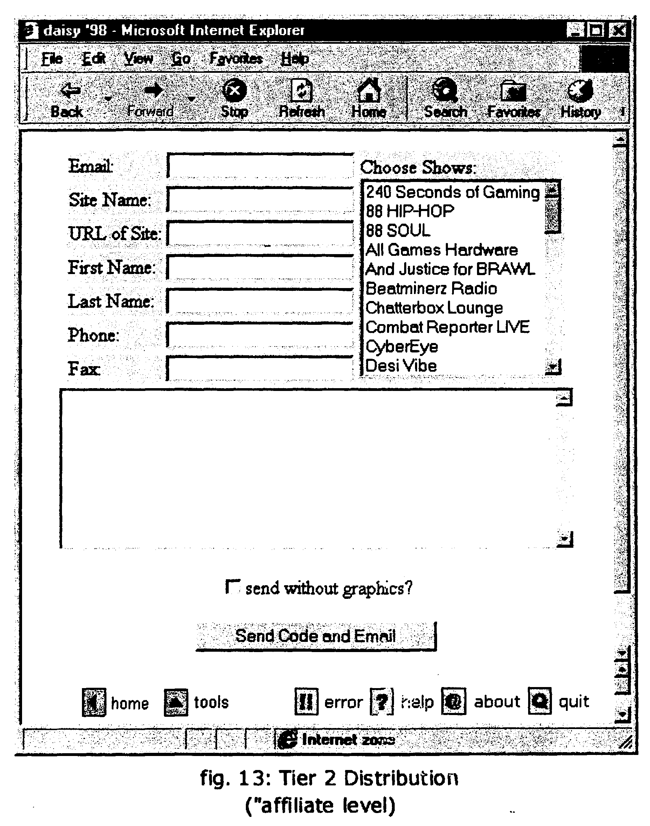

Affiliates generally need not have direct relationship with the system provider. However, according to an aspect of the present invention, affiliates referred to as second tier partners may have special relationships with the system provider. Such special relationships may involve marketing and promoting shows, cross-marketing their respective web sites, or even financial relationships. As shown in Fig. 13, the affiliates manager uses the tier 2 distribution tool to communicate and send show code to second tier partners.

### Traffic Tools

An operator having an appropriate level of access, such as a traffic manager, may login to the system 100 to access the traffic tools. In one embodiment of the present invention, the traffic tools include a "traffic reporting" tool, and a "loglite" tool to manage the collection of traffic data. Although not shown, the logging system of the present invention may constitute a customized extension of the conventional traffic logging system, such as MICROSOFT® IIS traffic system. The logging system collects and stores information such as web hits for each channel and/or each show offered by the system provider. It is appreciated that each channel may represent a web site, where viewers or users view shows, programs, streaming media presentation and the like.

The logging system stores the daily traffic data from each show and/or each channel (or web site) in log files. The daily log files from the same channel may be stored together in a single log file. Alternatively, all of the traffic data from every web site in the system may be stored in a single log file. Where there is a high volume of traffic data generated by the system, the traffic data is preferably formatted (e.g., indexed) such that the log flies are simple to access, maintain and process. Also, the logging system includes a filter for logging/storing only files specified by the traffic manager, preferably the filter parameters can be specified by the traffic manager.

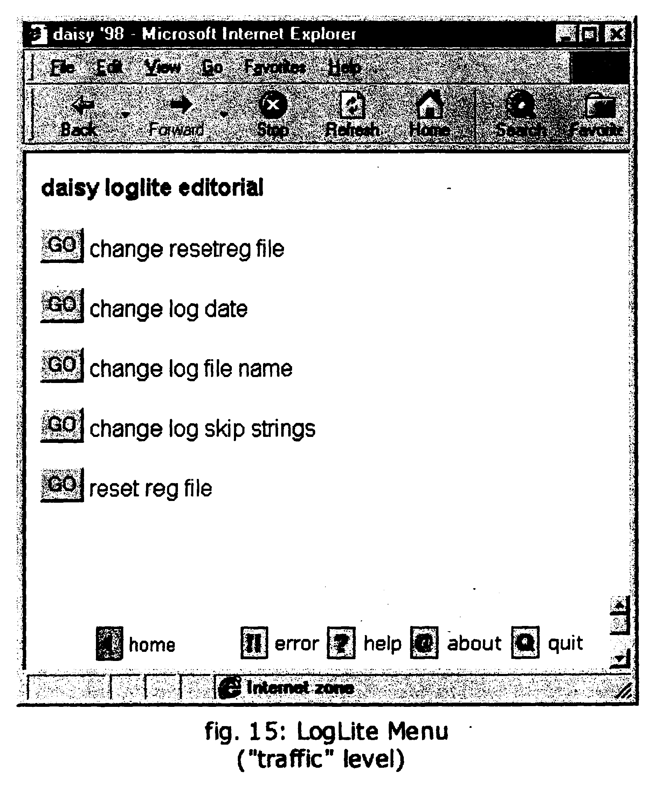

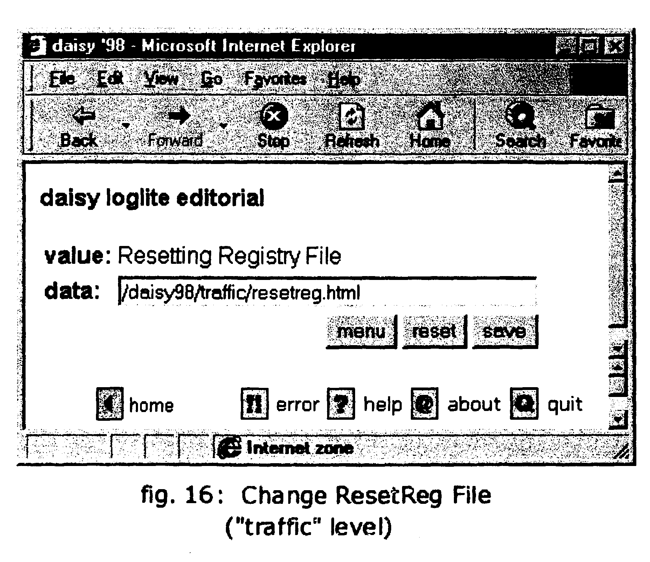

As shown in Fig. 15, the traffic manager uses the loglite tool to manage the logging system. With the loglite tool, the traffic manager may change the logging system parameters, such as the name and path of the reset registry file, log date, log file name and filter parameter (such as "log skip strings" representing a string of letters or words to filter out). However, the logging system does not apply any change to the logging system parameters until the "reset registry file" is accessed by the traffic manager. This verification mechanism is to insure that the system parameters are not erroneously changed. The reset registry file is a trigger which, when accessed, notifies the logging system to apply the changes to the logging system parameters. The traffic manager may change the name and path of the reset registry file, as shown in Fig. 16. Preferably, when the reset registry file is triggered, the logging system compares the current date with the revised log date and/or the system date to determine the validity of the revised log date or the integrity of the system date. For example, one or more days may have passed since the logging system was last activated.

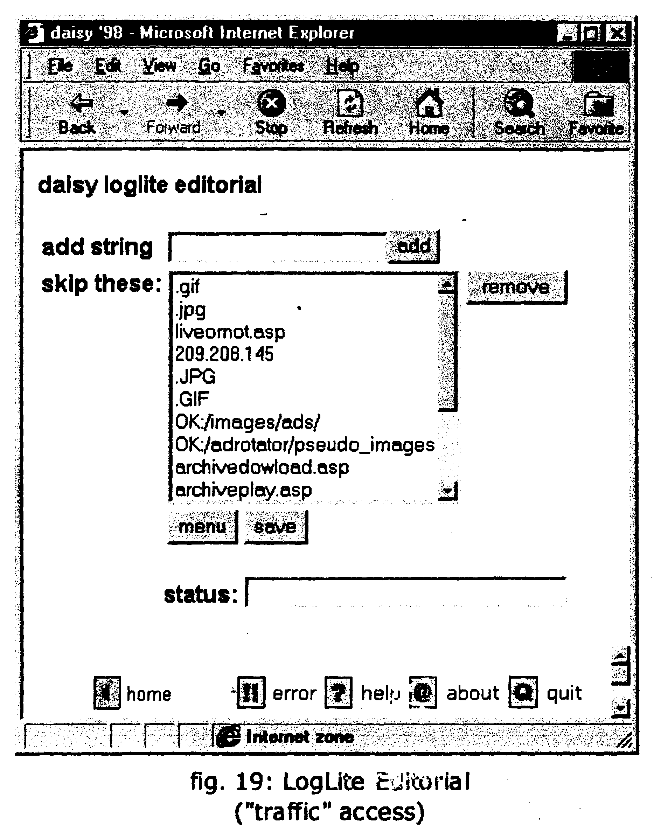

The logging system generates a file or list of allowed/disallowed file name patterns based on the filter parameter, such as the log skip strings. The traffic manager specifies the log skip strings using the loglite tool, as shown in Fig. 19. It is appreciated that the logging system does not apply any change to the filter parameter (e.g., log skip strings) until the "reset registry file" is accessed by the traffic manager. The disallowed file name patterns may represent disallowed file types or file names, i.e., those files that should not be logged by the logging system. For example, if a file type "gif" is on the disallowed file name patterns list, then the logging system will not log any "gif" files. That is, any file ending with ".gif" will not be logged by the logging system. However, the traffic manager may refine the list or create exceptions to the disallowed list by permitting the logging system to log a disallowed file type having a specific file name. For example, although the file type "gif" is on the disallowed list, the logging system may nevertheless log a file matching the name "exception.gif" if such file name is on the exception list.

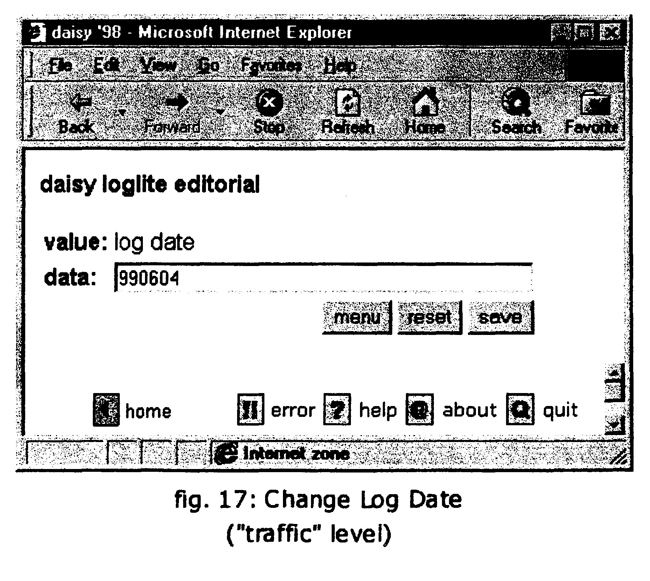

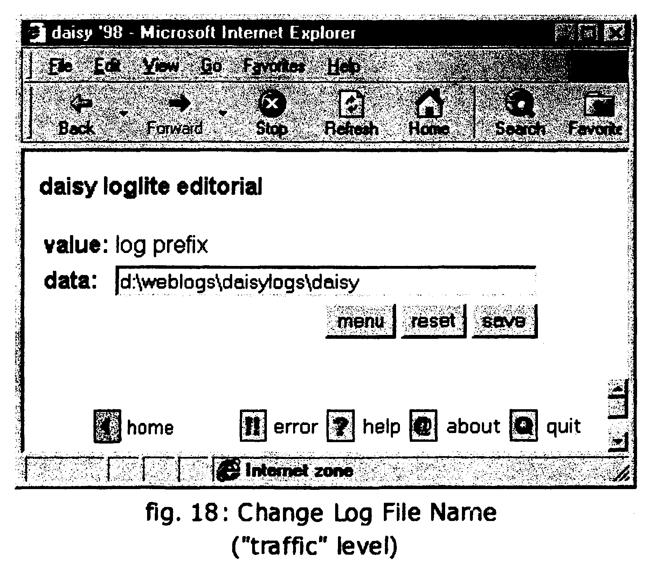

Generally, on reload or initialization, the logging system checks the last stored date (or log date) to determine if the traffic data should be stored in the current log file or in a new log file. This is to insure that each log file contains only the traffic data from a single day. The traffic manager may also force the logging system to create a new log file by changing the last store date as shown in Fig. 17. Further, the traffic manager may change the prefix of the log file name using the loglite tool to create a new log file or subfiles to further categorize the traffic data and store them separately, as shown in Fig. 18. Although not shown in Fig. 18, the traffic manager may also change the name of the log file. However, as noted hereinabove, the logging system does not apply these changes to the logging system parameters until the "reset registry file" is implemented by the traffic manager.

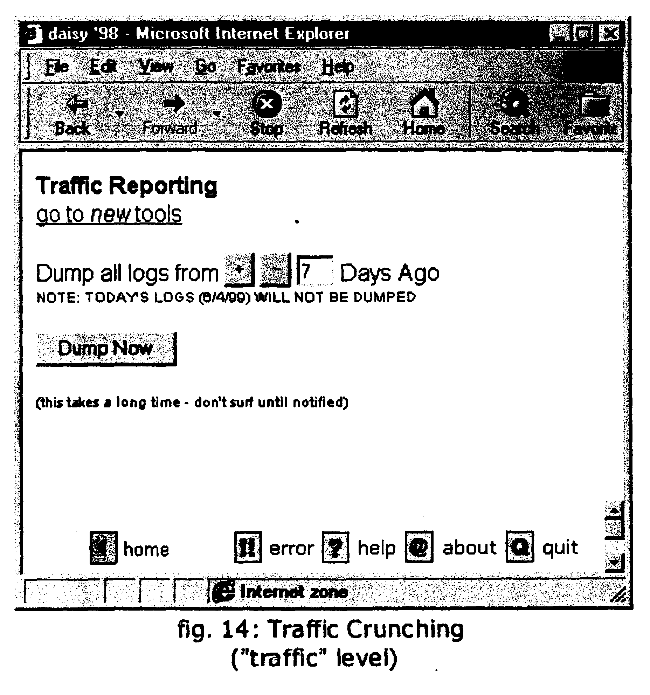

The traffic data collected by the logging system can be accessed by the traffic manager using the traffic reporting tool. As shown in Fig. 14, the traffic reporting tool permits the traffic manager to collate the daily log files from all of the channels into a single log file, thereby simplifying the task of downloading all of the log files. It is appreciated that the traffic manager may also specify the range of dates in collating the daily log files thus enabling the traffic manager to create a weekly, monthly or quarterly log file.

### Engineer Tools

An operator having an appropriate level of access, such as an engineer, may login to the system to access the engineer tools. In one embodiment of the present invention, the engineer tools include an "audio/video (A/V) control" tool for controlling the operation of the shows, a "change last show" tool for setting a particular episode as the last show, a "start and end times" tool for specifying the start and end time for the show presentation within a media stream, and a "multi-media server control" tool for storing names and status for all media servers and media software and for setting show defaults for live streaming and archiving.

Every show on the system has one episode which is designated as the "last" show, which can be readily accessed by the end user 200. When an end user 200 accesses the system 100 to view a particular show, the end user 200 may search the content database 190 for a particular episode from that show or simply select the "play last show" function to play the designated episode from that show without searching the content database 190. The most recent episode of the show is generally designated as the last show, however any episode of the show can be designated as the last show by the engineer.

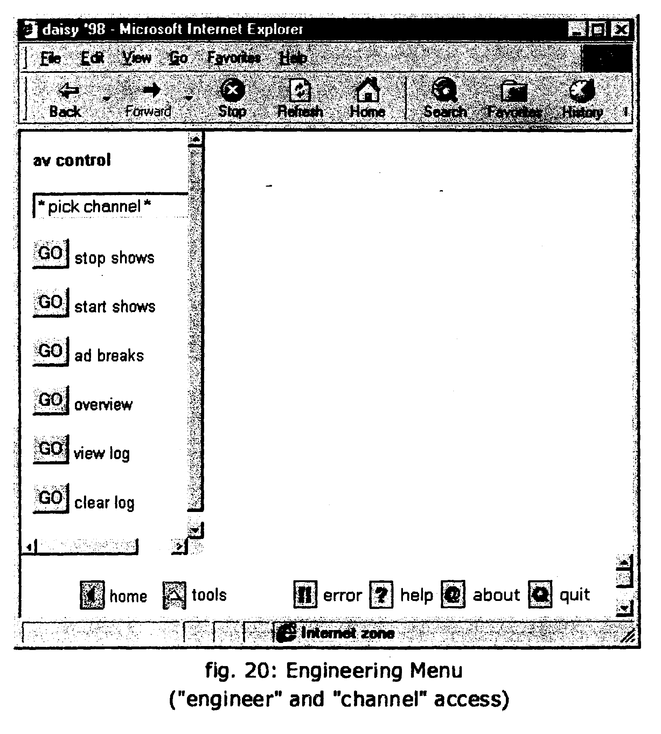

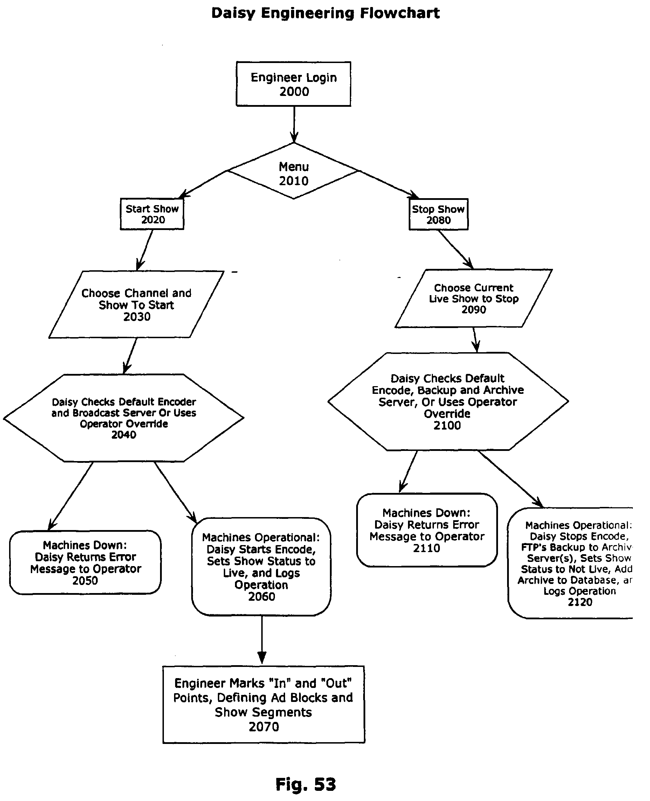

The process of starting and stopping a show is described in conjunction with the flow chart of Fig. 53. After successfully logging at an appropriate access level, the system presents the engineer with a menu of the engineer tools to choose from at step 2010. If the engineer selects the A/V control tool, the system then presents the engineering menu screen of Fig. 20 to the engineer. As shown in Fig. 20, in one embodiment, the A/V control tool comprises a stop show tool for stopping a currently running live show, a start show tool for starting a show (i.e., changing the status of the show to "live"), an advertising break tool for marking the start and end time of advertising breaks within a show, an overview tool for viewing a list of all shows that are currently running live, a view log tool for viewing the A/V log file containing entries for every show started and stopped, and a clear log tool for clearing the A/V log file. The A/V log file is stored in the administrative server 120. Preferably, the A/V log file is stored in a regular text file format.

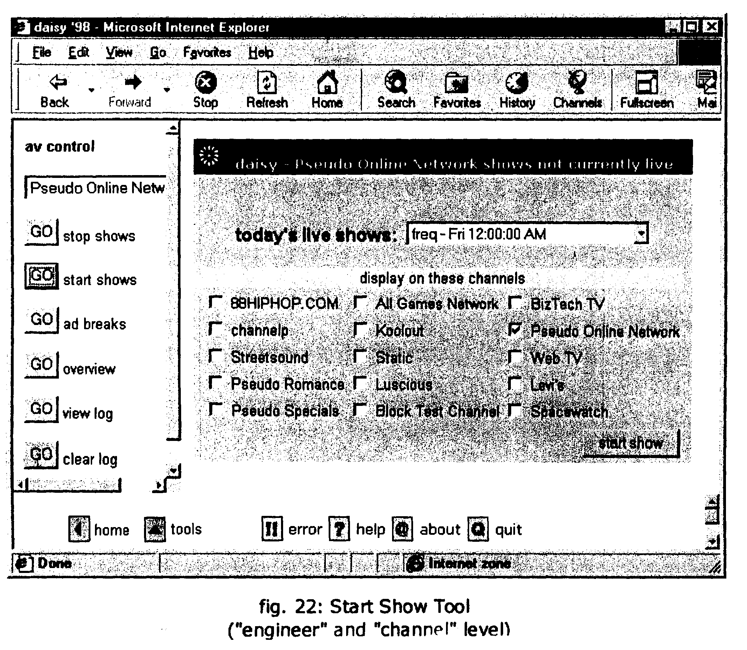

Although the flow chart of Fig. 53 depicts only the start show tool and the stop show tool, as described, a full menu of the A/V control tools, as shown in Fig. 20, is presented to the engineer. If the engineer selects the start show tool, the system presents the start show tool screen of Fig. 22 to the engineer at step 2020. At step 2030, the engineer initiates the process of starting a show by selecting the broadcast channel of the desired show and then selecting the desired show from a menu of shows that are currently available on the selected channel.

At step 2040, the administrative server 120 determines the default media encoder 125 (Fig. 51) and the default media server 130 (Fig. 51) for the selected show. The engineer may override the default settings and may select another media encoder 125 and/or media server 130 to be used. If the media encoder 125 and the media server 130 are determined to be operational by the administrative server 120, then the media encoder 125 encodes the selected show for live streaming, i.e., presentation or broadcast, and the administrative server 120 sets the status of the selected show to "live" at step 2060. Also, the administrative server 120 logs the start operation, such as the show name, the start date and time, the channel name and the like, in the A/V log file at step 2060.

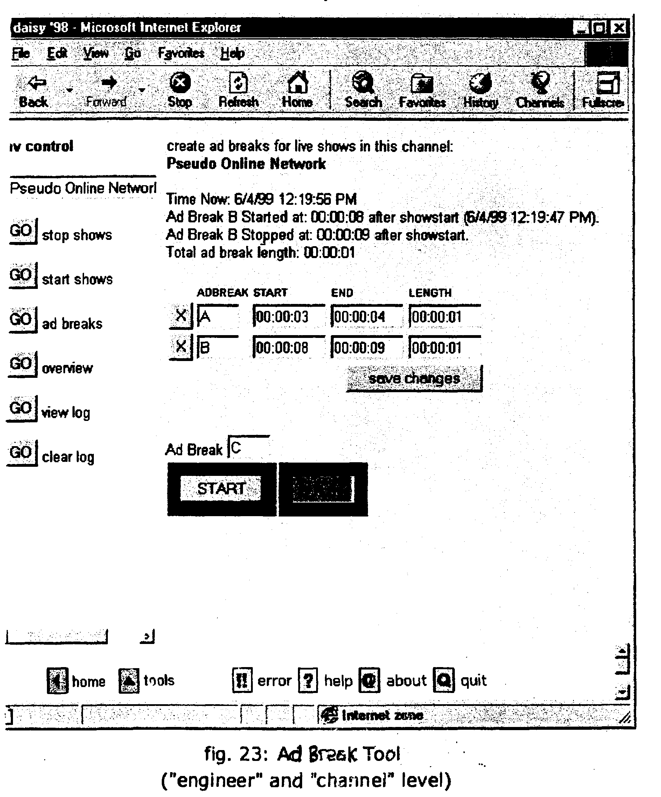

The advertising blocks and show segments for the selected show are defined by the engineer using the advertising break tool. The engineer specifies the start time and the end time of each advertising break at step 2070. As shown in Fig. 23, the start and end times of each advertising break may be specified in reference to the show start time. These start and end times are then cross-checked by an advertising management tool (discussed herein) to provide dynamic insertion of advertisements during a streaming media presentation. The media encoder 125 may over-encode, i.e., the encoder may encode longer than the duration of the show or begin encoding before the start of the show. In other words, the presentation of the show within the media stream may not correspond to the specified start and end time of the show. In such a case, the engineer manually adjusts the time that the show is presented within the media stream with the start and end times tool. For example, if the encoder starts encoding the show 30 seconds prior to the specified start time of the show, the engineer may start the show approximately 30 seconds into the streaming media presentation. That is, the start of the show is essentially delayed by 30 seconds to compensate for over-encoding of the show by the media encoder 125.

Returning to step 2040, if the default media encoder 125 and/or the default media server 130 are determined not to be operational, then the system returns an error message to the engineer at step 2050.

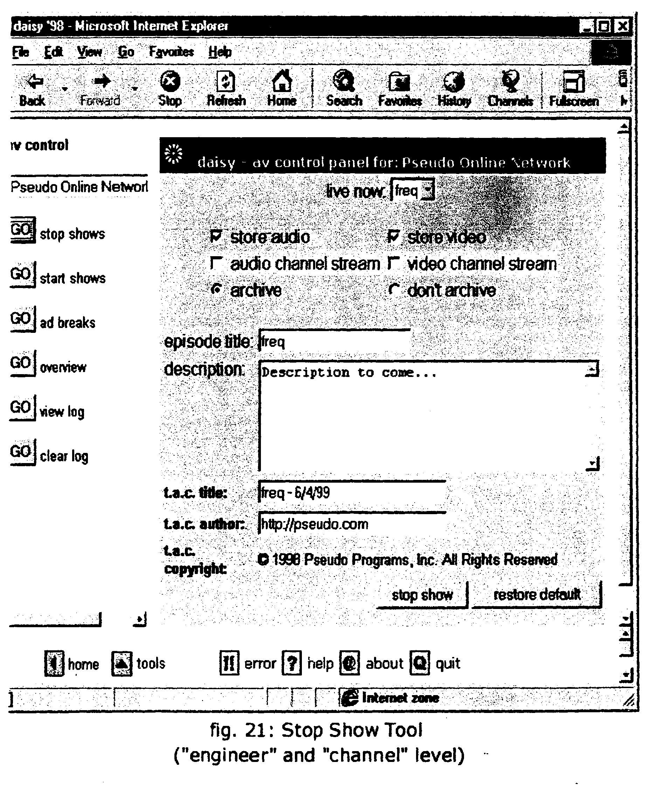

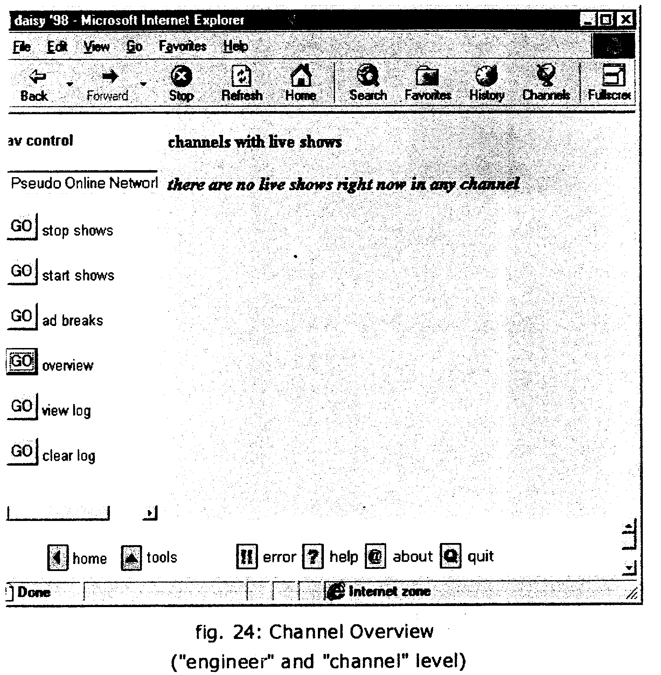

Returning to step 2010, if the engineer selects the stop show tool, the system 100 presents the stop show tool screen of Fig. 21 to the engineer at step 2080. The engineer initiates the process of stopping a show by selecting the broadcast channel of the desired show and then the desired show from a menu of shows that are currently "live" on that selected channel at step 2090. It is appreciated that the engineer may use the overview tool of Fig. 24 to determine which shows are currently live on the selected channel or to verify if the selected show is currently running live. Preferably, the overview tool provides a list of all shows that are currently running live along with their corresponding broadcast channel.

At step 2100, the administrative server 120 determines the default media encoder 125 (Fig. 51) and the default media server 130 (Fig. 51) to be used for archiving the selected live show. The engineer may override the default settings and may select another media encoder 125 and/or media server 130 as the default media encoder and/or media server. Next, the administrative server 120 determines whether the selected media encoder 125 and/or media server 130 are operational. Upon verification, the administrative server 120 instructs the media encoder 125 to stop encoding the selected live show and sets the status of the selected show to "not live" at step 2120.

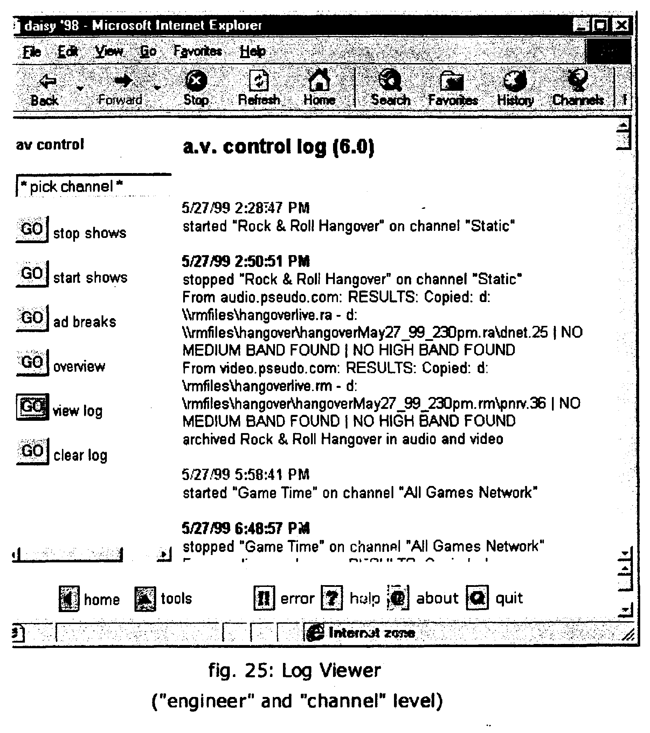

After the selected live show is stopped, the administrative server 120 archives the show in the content database 190, such as the audio and video contents of the show, messages and discussions of the chat group associated with the show and the like, at step 2120. The stop operation, such as the show name, the stop date and time, the channel name and the like, is also logged in the A/V log file by the administrative server at step 2120. It is appreciated that the engineer may use the view log tool of Fig. 25 to determine if the stop operation has been properly logged into the A/V log file. Also, it can be used to view the contents of the A/V log file. In order to avoid viewing and searching an excessively large A/V log file, the A/V log file may be periodically stored (archived) or cleared using the clear log tool.

Returning to step 2100, if the default media encoder 125 and/or the default media server 130 to be used for archiving the selected live show are determined not to be operational, then the system returns an error message to the engineer at step 2110.

### Community Administration Tools

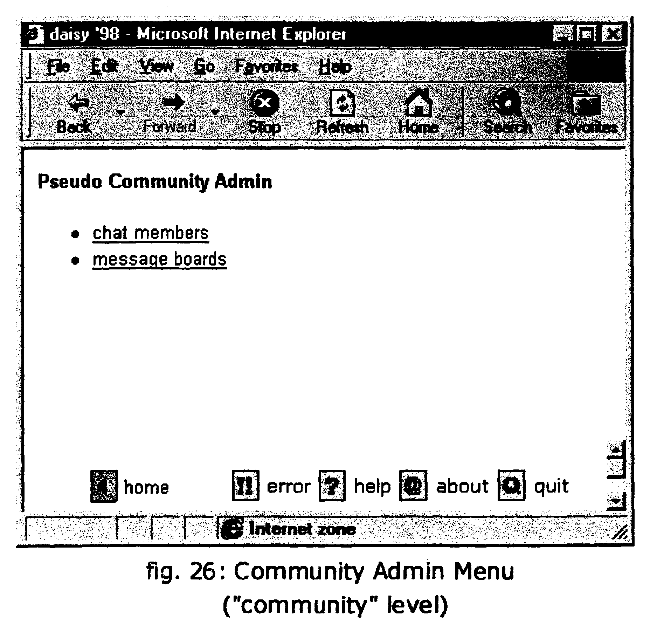

An operator with an appropriate level of access, such as a community manager, may login to the system to access the community administration tools, as shown in Fig. 26. After successfully logging in as a community manager, the system presents the community manager with a full menu of community administration tools. In one embodiment, the community administration tools include a chat members tool for editing the chat member's profile and/or personalities, a message boards tool for adding, and deleting and editing message/bulletin boards.

A chat group may be associated with each show, wherein the members of the chat group may engage in discussions (chats) with other members of the chat group, show hosts and guests who appear live on-screen, post (send) messages regarding the show, respond to a previously posted message, etc. As previously discussed, these chat group discussions and messages may be stored or archived together with the corresponding episode of the show. Preferably, the chat group discussions and messages are archived with a pointer to the corresponding episode of the show.

An end user may register with the system provider to become a member of a chat group associated with a particular show. The end user may register online from the system provider's web site to become a chat member. In order to register, the end user 200 provides chat member profile information, such as the name, address, telephone number, email address, etc., and selects a password and one or more personalities, such as an alias, character, fictitious persona, nickname, username, etc. In a preferred embodiment, the chat member profile registration information represents a specific, legitimate information about the end user, such as a name, password, address, etc., whereas, the chat personality information may identify or define the characteristics of a fictitious persona selected by the end user. Preferably, the chat member profile and personality information (records) are stored in the user database 180. In a preferred embodiment, the chat personality information of each end user's nickname is displayed and made available to the chat community, i.e., members of the end user's chat group.

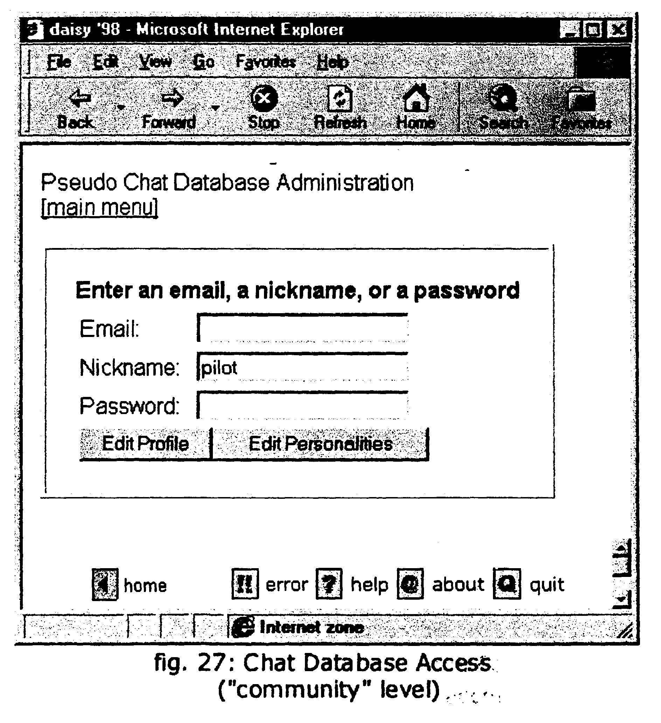

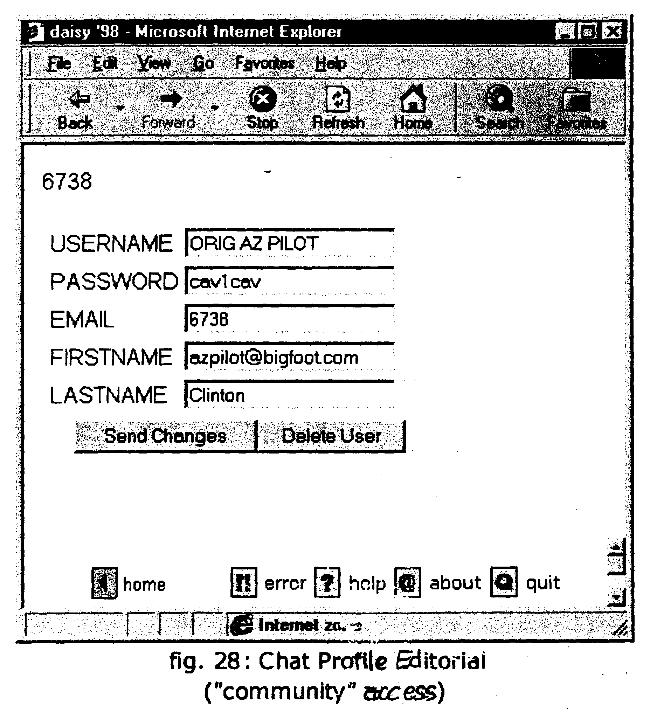

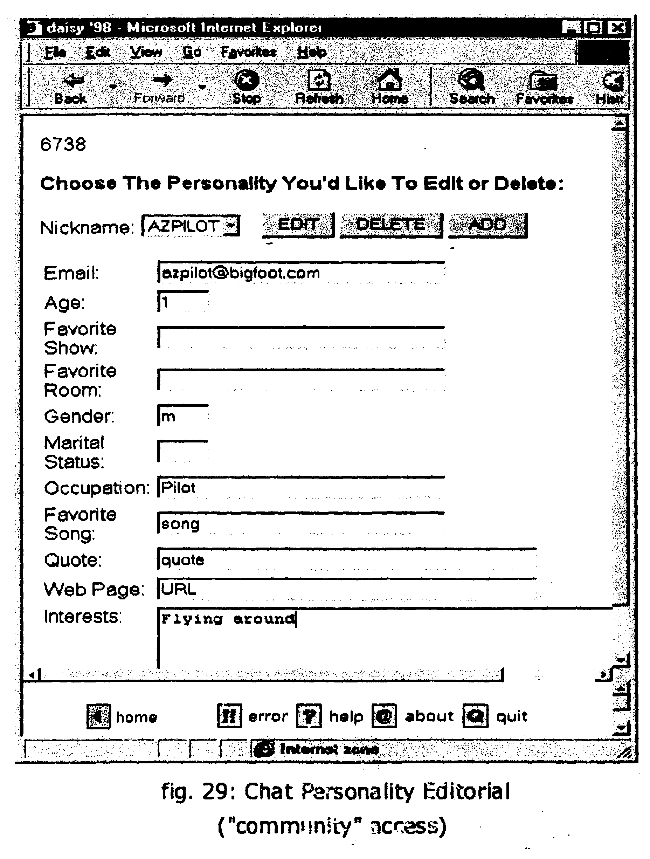

Any information contained in the chat member profile and personality records may be retrieved and modified by the community manager using the chat members tool, as shown in Fig. 27. The chat members tool can be used to search the user database 180 for a particular chat member's profile or personality record based on a searching parameter(s) specified by the community manager. After retrieving the chat member's profile record, the community manager may use the chat profile editing tool of Fig. 28 to modify the contents of the profile record or delete the profile record. Alternatively, the community manager may use the chat personality editing tool of Fig. 29 to modify the contents of the chat member's personality record. Also, the chat personality editing tool can be used to add a new personality or delete an existing personality. The chat member's profile record may be updated automatically and periodically with statistical information (such as, chat member's preferences, shows viewed, shows interacted with and the like) collected by the administrative server 120 (Fig. 51).

One or more message/bulletin boards may be associated with each show or channel available on the system. Preferably, a message/bulletin board is associated with a specific episode of a show. The end users 200, i.e., visitors to the system provider's web site, may use the message/bulletin board to communicate with other end users 200 and to interact on a real-time basis with show hosts and guests. The message/bulletin board may be used by an end user 200 to voice opinions, give advice, ask questions, share thoughts, etc., with others. Generally, the message/bulletin boards are organized by show and may be further divided into specific topics. Although only an operator with an appropriate level of access creates a new message/bulletin board, any end user 200 may create "infinitely recursive threads" within the message/bulletin board. It is appreciated the term "infinitely recursive threads" is used by those skilled in the art to describe a long chain of related messages. For example, the infinitely recursive threads may comprise an original message, replies to the original message, replies to the replies and so on.

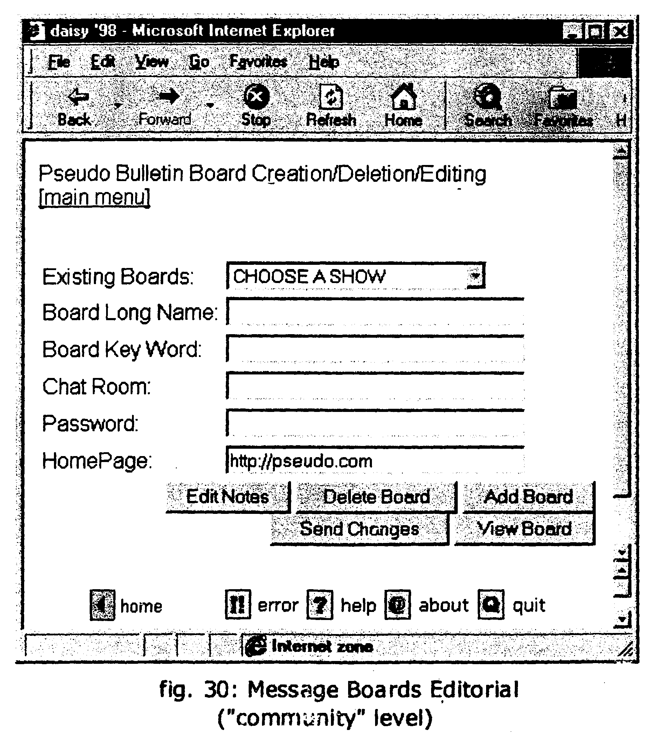

With the message boards editing tool, an authorized operator, such as the community manager, can create a message/bulletin board by specifying the message/bulletin information. The message/bulletin board information may include items such as a board name, the name of related chat room (group), an optional password to limit the access to the board, a homepage providing a direct link to the message board's owner, and keywords. Keywords may represent single word identifiers for indexing the message board and server-side folder names. The message/bulletin board along with its contents may be stored in the show/channel database 170. Preferably, the contents of message/bulletin board are archived with a pointer to the corresponding episode of the show. As shown in Fig. 30, the message board editing tool may be used to delete the message/bulletin board, to delete a specific topic from the message/bulletin board, to edit messages on the message/bulletin board, to view the message/bulletin board from the perspective of an end user 200, to edit message/bulletin board information, and to save changes.

### Channel Producer Tools

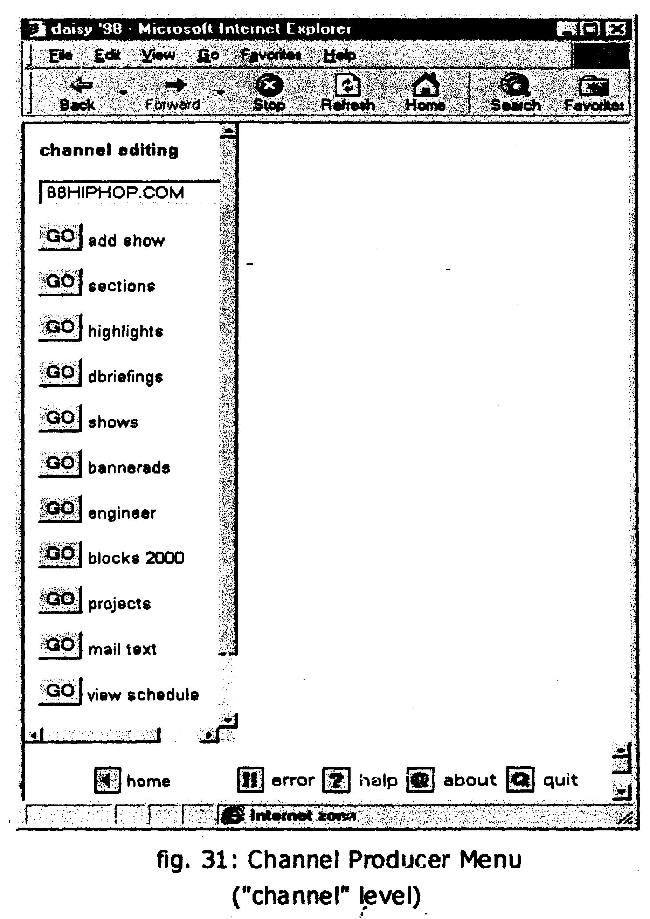

An operator having a sufficient level of access, such as a channel producer, may login to the system 100 to access the channel producer tools, as shown in Fig. 31. After logging in as a channel producer, the system may present the channel producer with a menu of the channel producer tools. In one embodiment, this menu includes an add show tool, a channel section tool, a channel highlights tool, a daily briefings tool, a banner advertising tool for viewing the current advertisement or inserting a new advertisement, a channel block scheduler, a project browsing tool for viewing a list of all current projects under development for his channel, a mail text tool for sending email messages to the end users 200, such as members of a chat group associated with any of the shows on the channel, and a schedule viewer for viewing the shows currently scheduled on the channel for the week. Normally, the channel producer may also access the show producer tools which are described hereinbelow and the engineering tools for starting and stopping shows on the channel as described hereinabove.

Each channel may present accompanying or ancillary content, such as flat media content, in concert with the streaming media presentation. The ancillary media content may include channel sections, channel highlights, and daily briefings.

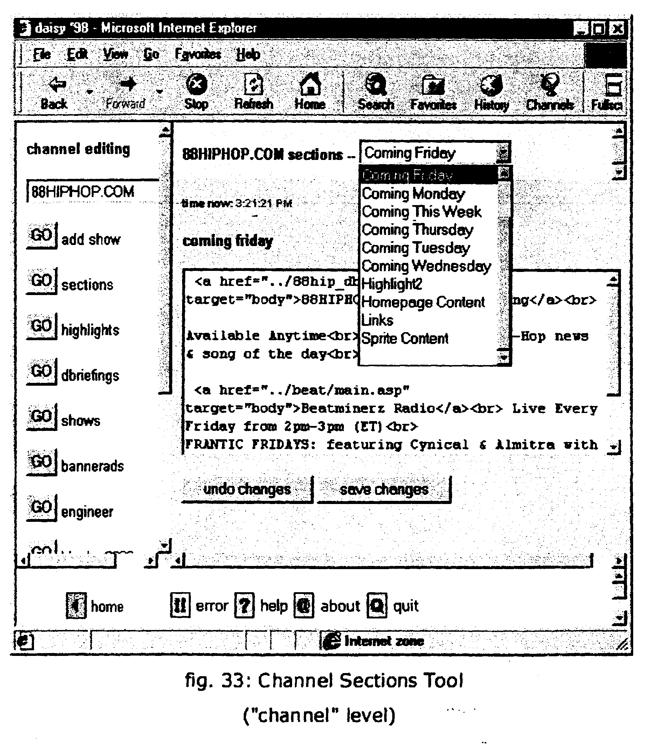

The channel sections may comprise blocks of text, such as time-sensitive information about the channel, shows on the channel and the like. The channel sections are generally displayed on the channel homepage or the system provider's homepage to promote and provide information about the channel to the end users. The channel sections tool, as shown in Fig. 33, is used to create and update the channel sections.

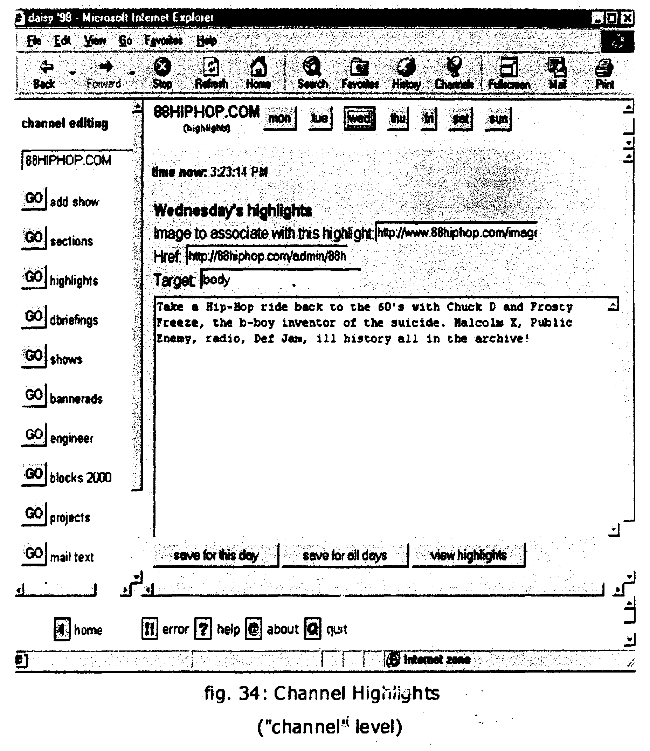

The channel highlights may comprise a block of text, image, link to an image or the like. Preferably, the image link may additionally specify how the link is to be displayed on the channel-wide homepage. Generally, the channel highlights contain information about upcoming events, special guests, new shows and the like that are displayed on the channel homepage or a network (system provider's) highlights page. Alternatively, the channel highlights may be displayed in a separate window within the channel homepage. It is appreciated that the channel highlights may be updated dynamically "on-the-fly" or on a periodic basis. The channel highlights tool, as shown in Fig. 34, is used to create and update the channel highlights.

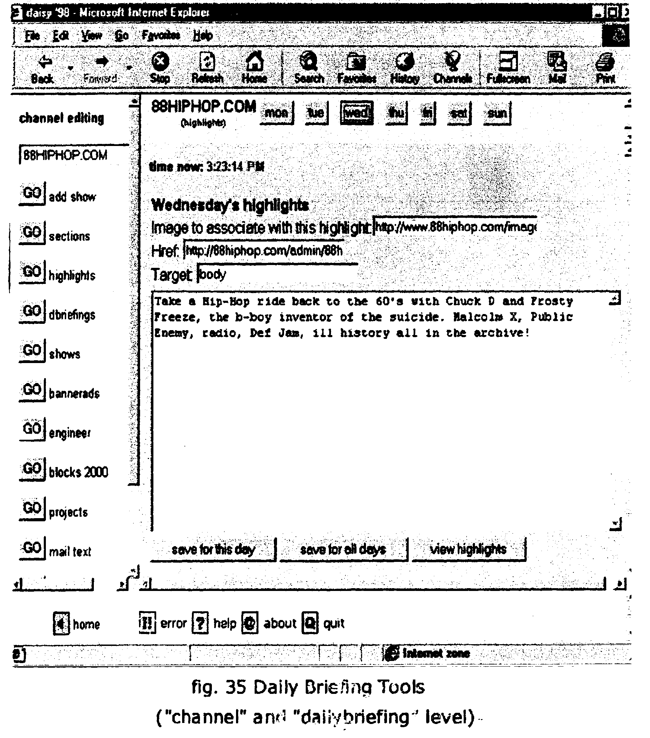

The daily briefings are archived entries for shows that are scheduled to air in the future. These archived entries may not be presented (appear) until the scheduled broadcast date as specified by the channel or show producer. The daily briefings may be a preview of a show which is typically pre-produced (before the production of the actual show) and shorter than a regular show. The daily briefing tool, as shown in Fig. 35, is used to create and edit the daily briefings (or archived entries).

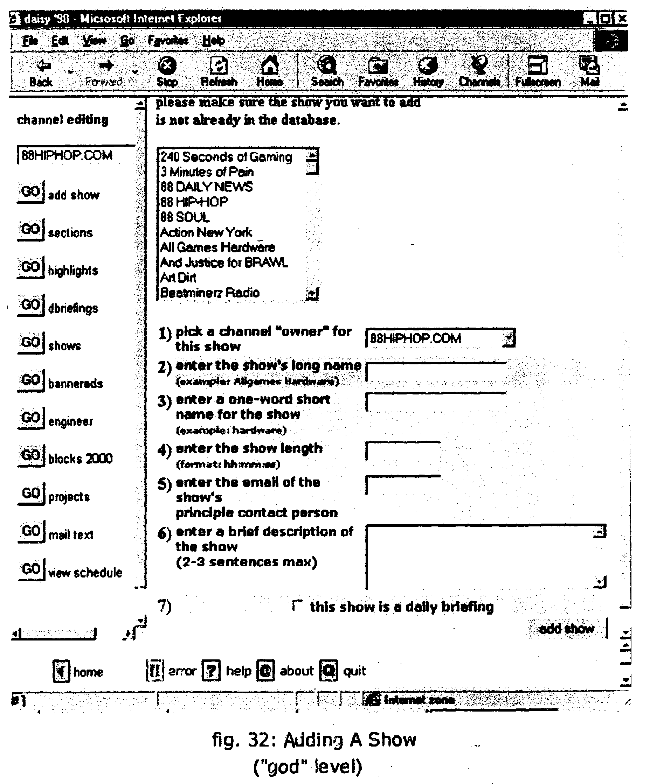

Before a show can be scheduled on a channel, the channel producer must add the show to the channel. As shown in Fig. 32, the channel producer enters the name of the show along with a corresponding short name and the length of the show, a brief description of the show, and the show's principle contact person. Preferably, the name of all of the shows that have been added to the channel may be kept in an available show list or file. Information about the show and the available show list may be stored in the show/channel database 170.

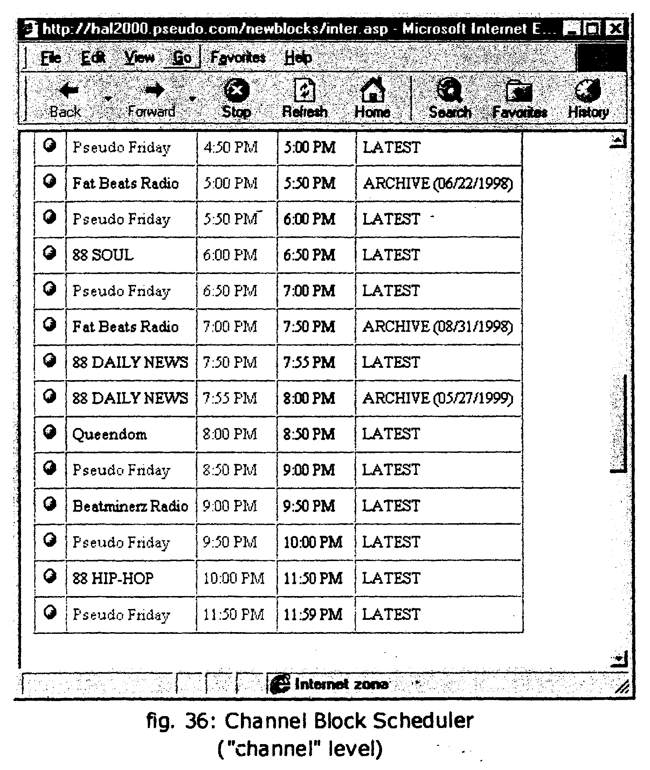

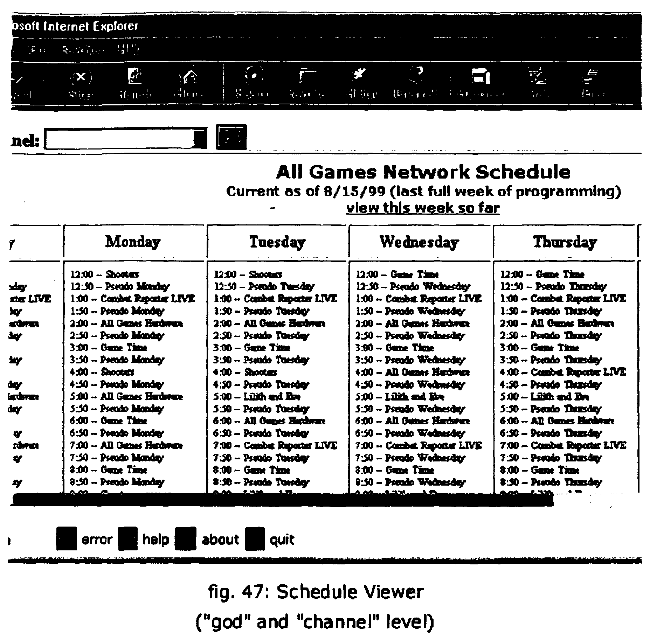

Once the show has been added to the channel, the channel producer can schedule the show for presentation within the channel's media stream. The channel producer uses the channel block scheduler, as shown in Fig. 36, to schedule 24 hour streams of media presentation (programming) for any given day. The channel producer may schedule a live or archived show. After the show has been scheduled, the channel producer may use the schedule viewer, as shown in Fig. 47, to view all of the scheduled shows on the channel for the week or to verify that the show has been properly scheduled.

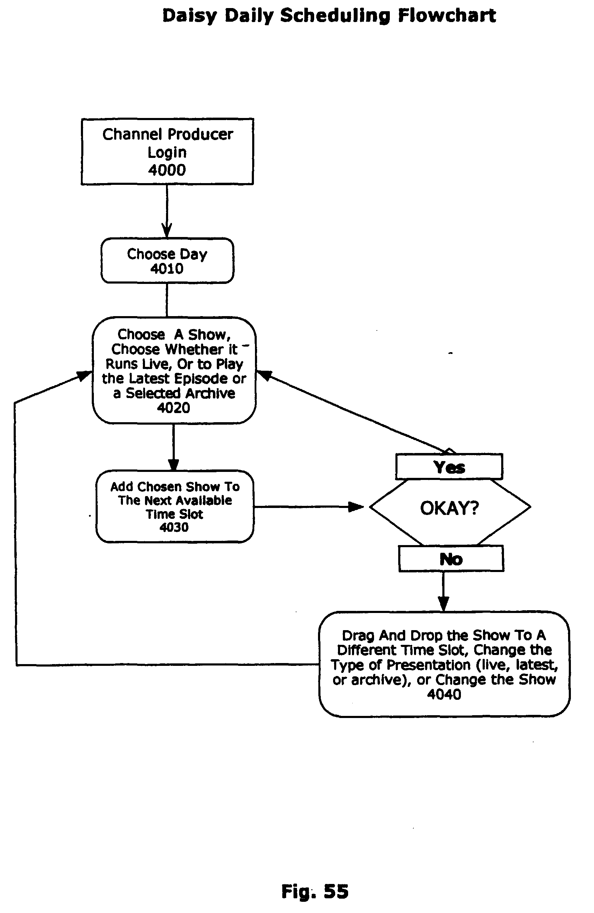

The process of scheduling a show on a channel is described in conjunction with the flow chart of Fig. 55. After logging in as a channel producer at step 4000, the system 100 presents the channel producer menu screen of Fig. 31. Although the flow chart of Fig. 55 depicts only adding a-show to the schedule using the channel block scheduler, it is appreciated that a full menu of the channel producer tools, as shown in Fig. 31, is presented to the channel producer. If the channel producer selects the channel block scheduler to add a show (or program) to the channel schedule, the system 100 requests the channel producer to choose a particular schedule by specifying the date at step 4010. For example, if the channel producer wants to present (broadcast) the show on July 30, 1999, then the system 100 retrieves the channel schedule for that date.

As shown in Fig. 36, the system 100 presents the channel producer with a list of shows scheduled for the selected date (i.e., a 24 hour stream of scheduled show). The channel producer selects a show, such as the "88 DAILY NEWS" show from the available show list and then selects a particular episode of the selected show at step 4020. The selected episode may be a new "live" episode, the latest episode or one of the archived episodes of the selected show. Any accompanying or ancillary content, such as the chat group discussions, associated with a previous presentation of the archived episode may or may not be presented with the current presentation of the archived episode. That is, the channel producer may edit the archived episode of the show before rescheduling it for another presentation.

The channel block scheduler makes an inquiry at step 4030 to determine if the selected episode of the show is to be added to the next available time slot in the channel schedule. If the inquiry at step 4030 is answered in the affirmative, the channel block scheduler adds the selected episode of the selected show to the next available time slot and returns to step 4020. The operations associated with steps 4020-4040, as discussed herein, may then be repeated to add more shows to the channel schedule.

However, if the inquiry at step 4030 is answered in the negative, then the channel producer may select a different time slot for the selected episode of the show at step 4040. The channel producer may select a different available time slot or replace a previously scheduled episode of a show with the selected episode of the selected show. For example, the channel producer may replace the latest episode of the "88 SOUL" show currently scheduled for the 6:00-6:50 PM time slot in Fig. 36 with a live episode of the "Pseudo Friday" show. The operations associated with steps 4020-4040, as discussed hereinabove, may be also repeated to add more shows to the channel schedule.

### Show Producer Tools

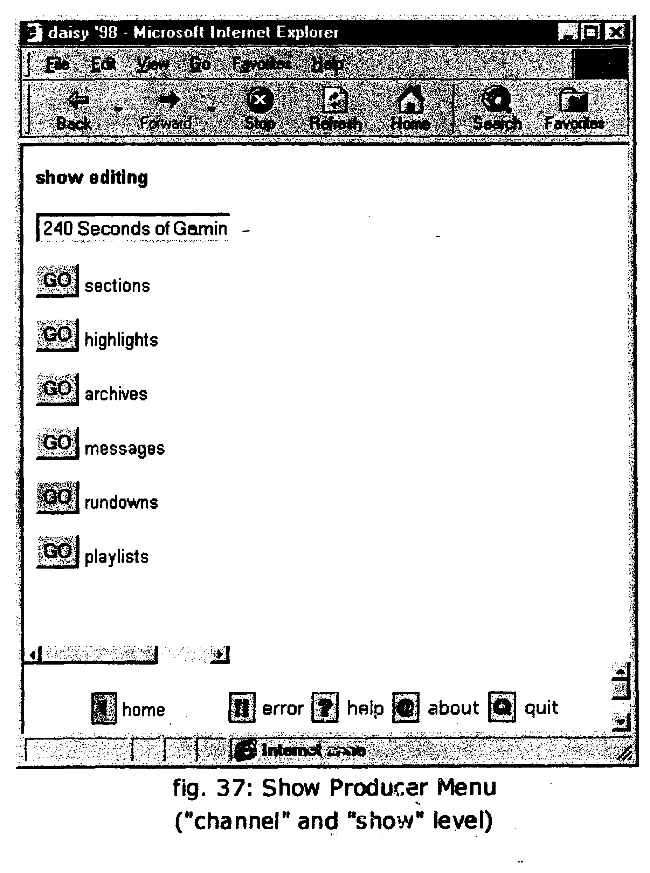

An operator with an appropriate level of access, such as a show producer, may login to the system to access the show producer tools, as shown in Fig. 37. After logging in as a show producer, the system 100 presents the show producer with a full menu of the show producer tools. In one embodiment, the show producer tools include a show sections tool, a show highlights tool, archive editing tools, a show message board editorial tool, a show rundown tool, and a playlist tool.

An accompanying or ancillary content elements, such as flat media content, may be presented in concert with a show. The accompanying media content may include show sections, show highlights, show rundowns, playlists, and message/bulletin boards.

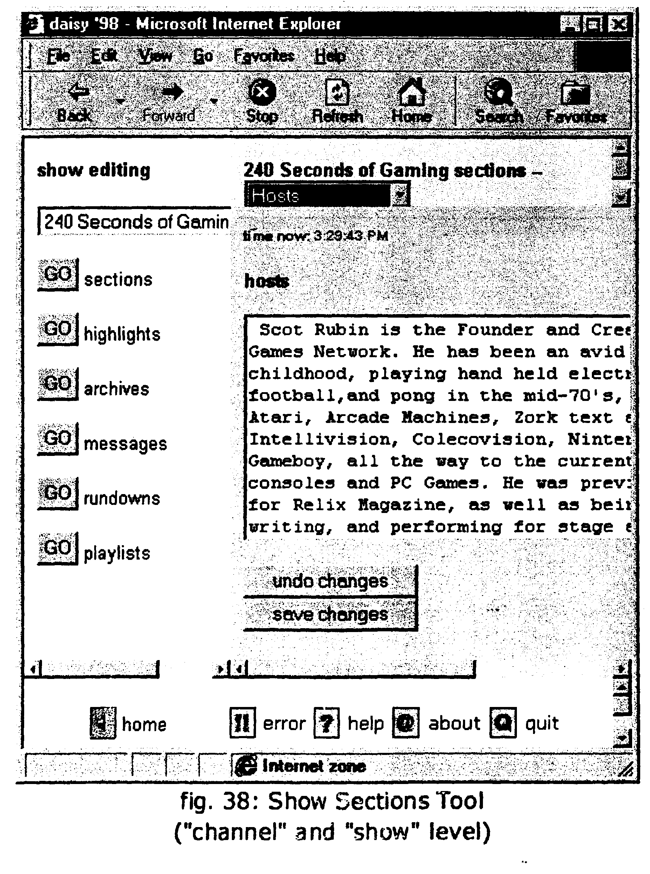

The show sections may comprise blocks of text, such as time-sensitive information about the show, show host, show guests, show synopsis and the like. It is appreciated the term "time-sensitive information" is used by those skilled in the art to describe information that becomes "stale" over time. The show sections are generally displayed on the show-wide homepage or the channel-wide homepage to promote and provide information about the show to the end users 200. The show sections tool, as shown in Fig. 38, is used to create and update the show sections.

The show highlights may comprise blocks of text, images, links to images or the like. Preferably, the image links may additionally specify how the linked images are to be displayed on the show homepage. Generally, show highlights contain information about upcoming events and special guests on the show that are displayed on the show homepage or the channel highlights page. Alternatively, the show highlights may be displayed in a separate window within the show-wide homepage. The show highlights may be dynamically updated "on-the-fly" or on a periodic basis. The show highlights tool (not shown) is used create and update the show highlights.

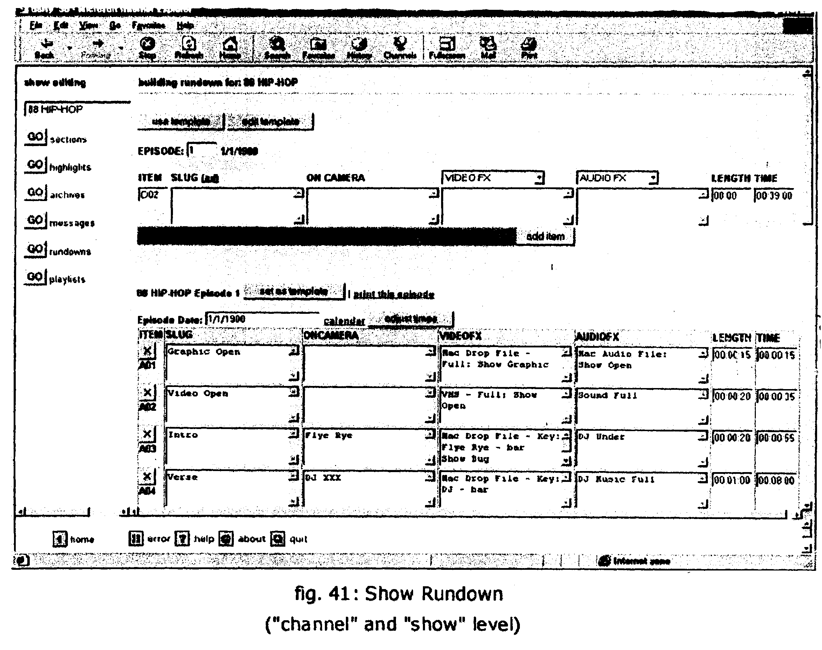

The show rundown may represent an item-by-item summary (or a time-sheet) of the elements which comprise a specific episode of the show, including any advertising blocks. Preferably, the show rundown is organized into program segments with an advertising block following each program segment. The show rundown tool, as shown in Fig. 41, is used to generate and edit the show rundowns. The show producer may edit any of the elements in the show rundown, such as element A01 in Fig. 41. Preferably, If the show producer changes the placement (start) time and/or length of an element, the show rundown tool automatically (or dynamically) updates the placement time for all subsequent time slots. The show producer may also use the show rundown tool to select an advertisement from a list of available advertisements for each advertising block. The list of available advertisements will be described below in conjunction with the advertising sales and management tools.

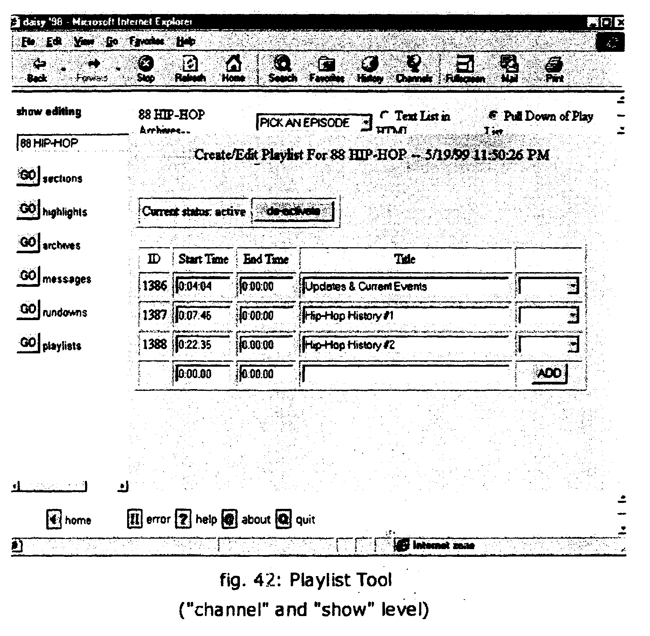

The playlist may represent links to specific portions of an archived episode of the show, i.e., the actual media file(s) containing the show's audio or video content. For example, the show producer may create a show highlight from two five-minute interviews contained in an archived episode of the show by establishing links directly to these interviews. Also, as shown in Fig. 42, the show producer may use the play list tool to generate a traditional text-based playlist by establishing links to the appropriate archived media file, i.e., a specific portion of an archived episode of the show. The show producer may use the playlist tool to replay a segment of the archived episode or create a new episode from segments of archived episode(s). In other words, the show producer may edit an archived episode of the show before or after replaying or rescheduling the episode for broadcast.

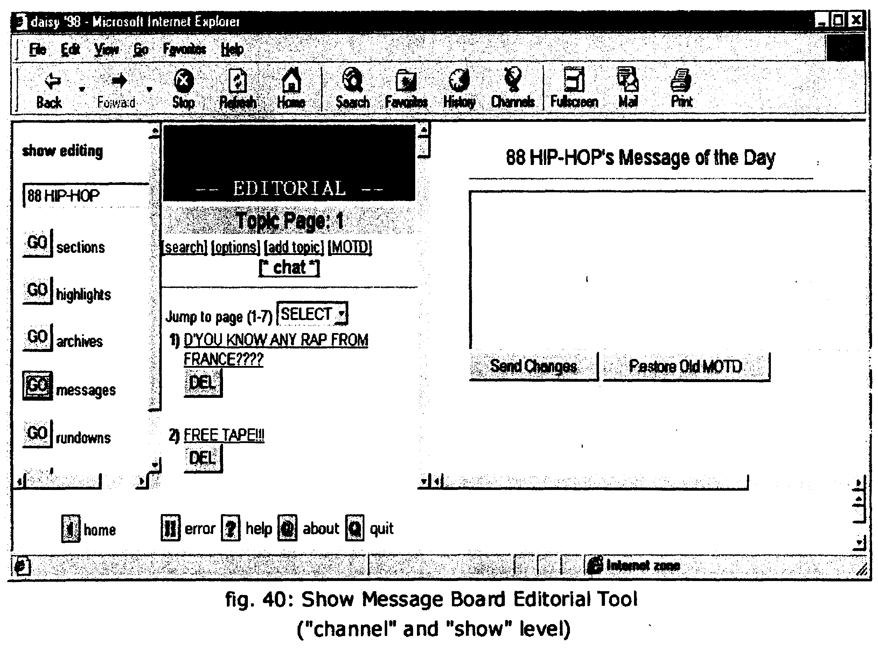

As discussed above, one or more message/bulletin boards may be associated with each show, channel or specific episode of a show. Although the message board/bulletin is generally under the editorial control of the message board manager, the show producer may also edit any message/bulletin board that is associated with the show. As shown in Fig. 40, the show producer may use the "show message board" editing tool to edit his message of the day on the associated message/bulletin board, to delete topics and messages on the associated message/bulletin board, to delete the entire contents of the associated message/bulletin board, and to save the changes to the show/content database 170.

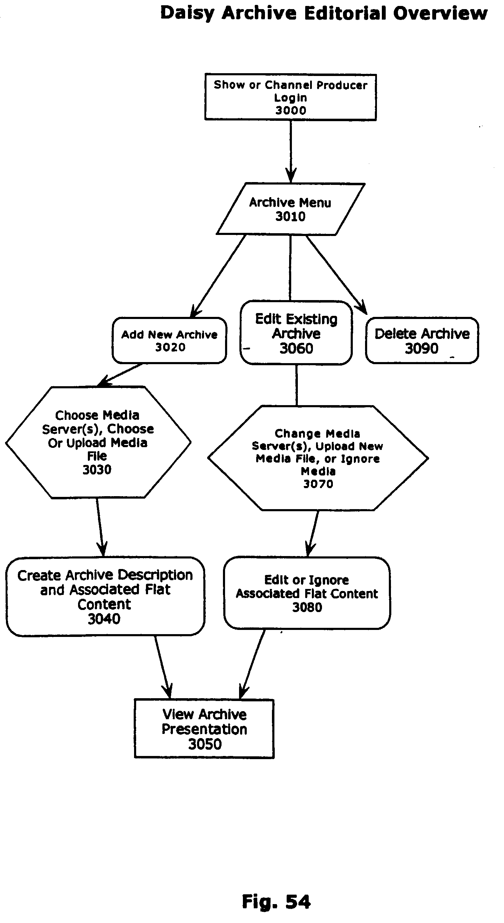

The process of creating a new archive, editing an existing archive or deleting an existing archive is described in conjunction with the flow chart of Fig. 54. According to the present invention, the system automatically archives all episodes of the shows after they are initially presented. After logging in at step 3000, the system presents the show producer menu screen of Fig.37. Although the flow chart of Fig. 54 depicts only the archive editing tools, a full menu of the show producer tools, as shown in Fig. 37, is presented to the show producer.

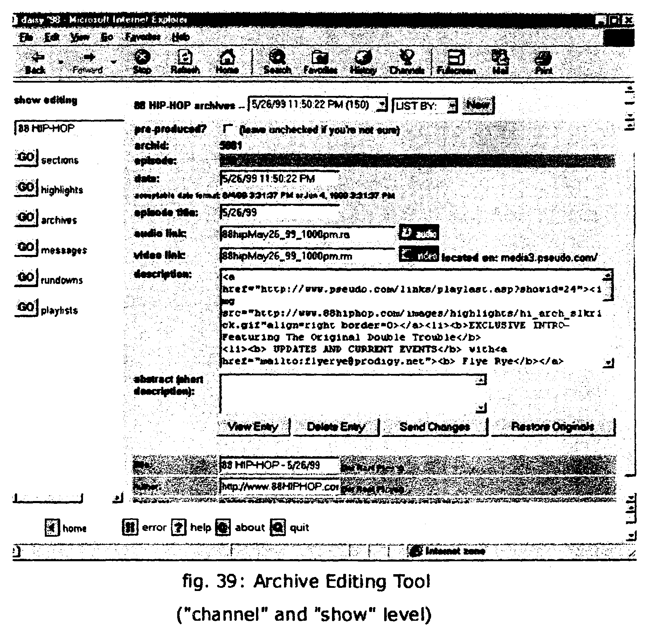

When selected, the system presents the archive editing tool screen of Fig. 39 to the show producer at step 3010. The show producer may delete an existing archive by first selecting the appropriate media server 130 to retrieve the desired archived episode, i.e., associated media files and then deleting the retrieved archived episode at step 3090. After the desired archived episode has been retrieved from the content database 190, the show producer implements the "delete entry" function of Fig. 39 to delete the archived episode.

The show producer may add a new archive or archive a particular episode of the show at step 3020. The show producer initiates the process of archiving an episode by selecting the media server 130 to be used for archiving (storing) the episode at step 3030. The episode may be archived in a new media file or an existing media file. The content of a show (or an episode of the show) may contain only audio, only video or both audio and video. The archive editing tool provides the content information, such as audio and video links, for each archived episode of the show. For example, in Fig. 39, the archive editing tool illustrates that episode 150 of the "88 HIP-HOP" show contains both audio and video links, indicating that there are both audio and video content in the episode.

After selecting the media server, the show producer provides an archive description of the episode and any associated ancillary content information, such as episode title, date and the like at step 3040. The flat content server 140 (Fig. 51) may separately store the ancillary content information and archive description as two media files in the content database 190. The newly created archive (or media files) may be viewed by the show producer using the view entry button in Fig. 39 at step 3050.

Returning to step 3010, the show producer may edit an existing archive at step 3060. The show producer initiates the process of editing an archive by first selecting the appropriate media server 130 and then retrieving the desired archived episode (associated media files) from the content database 190 at step 3070. The show producer may edit the retrieved media file, such as the ancillary content information, and store the revised media file in the content database 190 at step 3080. The revised contents of the media file, may be viewed by the show producer using the view entry function of Fig. 39 at step 3050.

### Project Management Tools

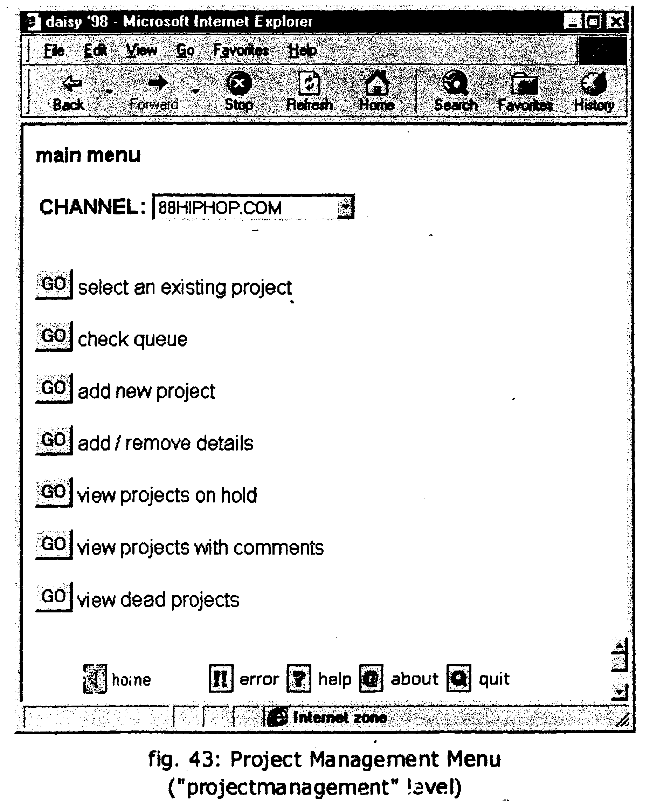

An operator with an appropriate level of access, such as a project manger, may login to the system to access the project management tools, as shown in Fig. 43. After logging in as a project manager, the system presents the project manager with a menu of the project management tools. In one embodiment, the project management tools include a project selector, a "check queue" tool, an "add new project" tool, an "add/remove details" tool, a project work type editor, a "view projects on hold" tool, a "view project with comments" tool, and a "view dead projects" tool.

The project manager first selects a particular channel, such as the "88HIPHOP.COM" channel, before utilizing one of the project management tools. The project manager adds or schedules a new project by specifying the project name and providing information about the project, such as a description of the project, the name of the contact person, and the scheduled completion date (collectively referred to hereinafter as project information). The add new project tool also stores the project information in the show/channel database 170. The project manager may verify that the project has been properly entered by using the project selector.

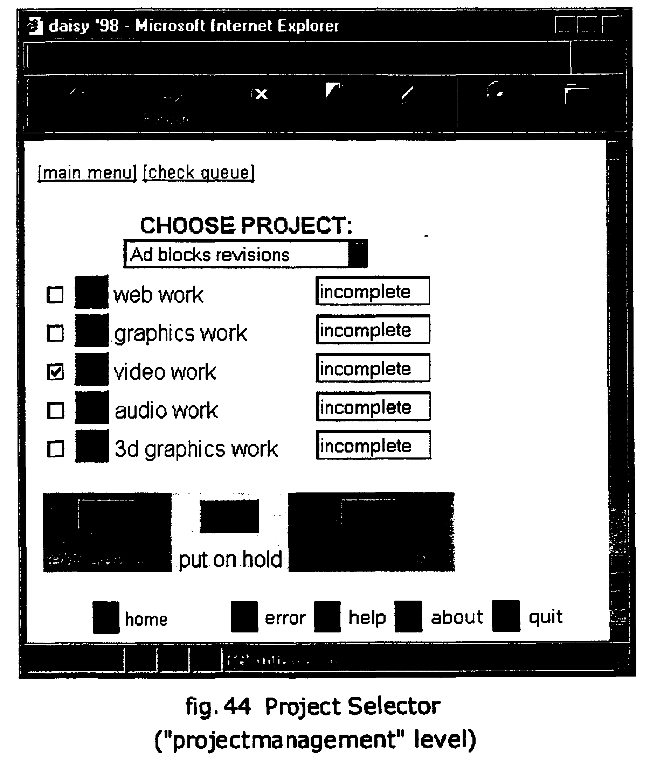

The project selector provides a project list of all currently active projects on the selected channel. The project manager may select a project from the project list to obtain detailed information about the selected project, such as work types and their current status, as shown in Fig. 44. The work types may include web work (i.e., web page layout), graphics work, video work, audio work, and 3-D graphics work . The project selector may also be used to edit/update the project information or the status of the project, such as placing the project on hold, canceling the project (in case of a "dead project") or changing the status of the project to complete. The project manager may verify that the status of the selected project has been properly updated by using the "view projects on hold" tool and "view dead projects" tool. The "view projects on hold" tool provides a list of all projects that are currently on hold and the "view dead projects" tool provides a list of all cancelled (or "dead") projects. Any currently inactive project (a project on hold or a dead project) may be activated (or revived) by the project manager with the "view dead projects" and "view projects on hold" tools.

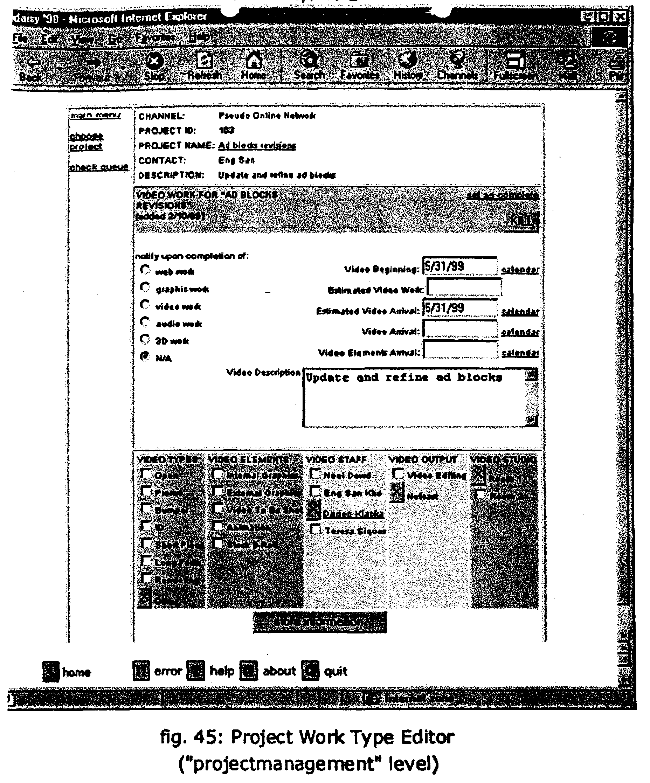

Details of a specific work type associated with the selected project (hereinafter referred to as the project details) can be edited using the project work type editor of Fig. 45. For example, the project manager may be used to alter the schedule completion date of the selected project, set the start date of the selected project, set the end date of the selected project, select the final delivery medium (output format) for the selected project and the "notify upon completion" criteria, add or remove elements from the selected project's work type, or add or remove personnel from the selected project. It is appreciated that if the project manager sets the "notify upon completion" criteria to "web work" then the project manager will be notified by email or by other comparable means when all of the web work on the selected project is completed. Preferably, the project work type editor is linked to the project selector, such that the project manager may access the project work type editor directly from the project selector screen of Fig. 44. For example, the project manager may access the project work type editor by selecting the video work type in Fig. 44 to view and/or edit detail information regarding the video work type of the project entitled "Ad blocks revisions," as shown in Fig. 45.

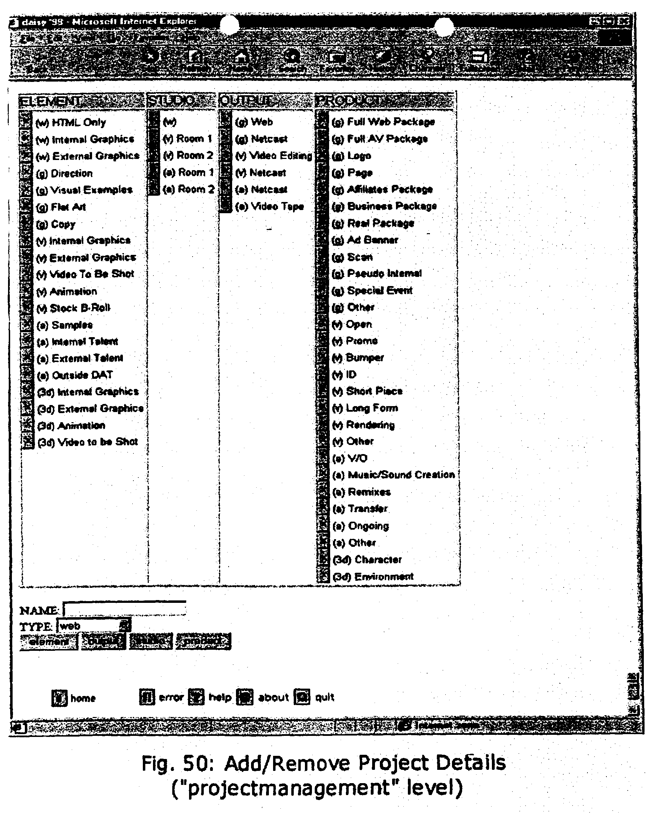

In one embodiment of the present invention, the project details includes work elements, studio locations, output formats, and project type. Each project detail may be categorized in terms of its work type. The add/remove details tool can be used to add or remove any project detail from the project details screen of Fig. 50. For example, as shown in Figs. 45 and 50, the work elements for the video work type (the video elements) may include internal graphics, external graphics, video to be shot, animation, and stock B-roll (i.e., footage stored in a file and used for a different purpose in a later broadcast). The web elements for the web work type may include HTML code, internal graphics, external graphics and the like. Also, as shown in Figs. 45 and 50, the product type for the video work type (video types) may include "open", "promo", "bumper", "ID", "short piece", "long form", "rendering" and "other".

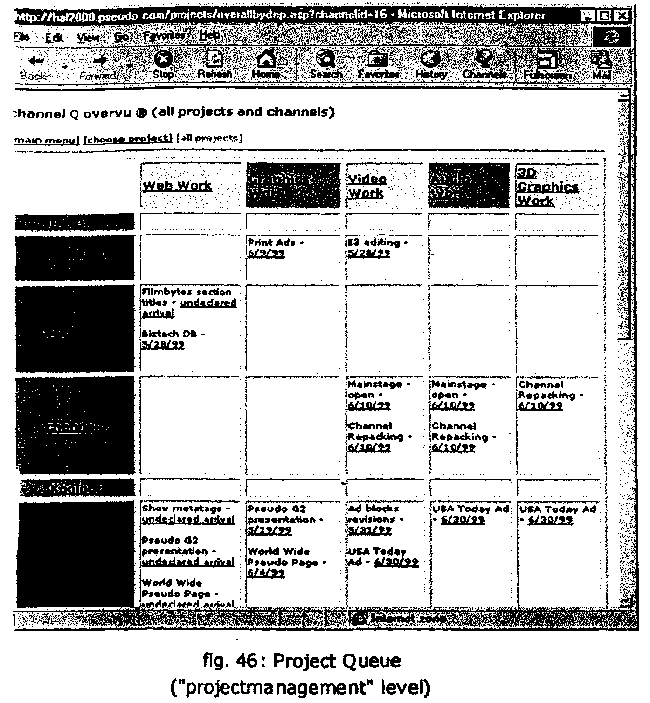

All currently scheduled work types (projects) along with their due dates on every channel can be displayed by the project manager with the check queue tool of Fig. 46. For example, in Fig. 46, under the video work type, the "E3 editing" project for the "All Games Network" channel has a due date of "5/28/99". The project manager can select on any information that is underlined in Fig. 46, such as a channel name, a due date or a work type, to obtain additional information about the project. For example, the project manager can select on any one of the work types, such as the "Web Work" in Fig. 46, to obtain a timeline of all existing projects that have "Web Work" (not shown). Preferably, the projects shown in the timeline are color coded in accordance with their current status, such as late, on time, and undeclared.

In a preferred embodiment, the check queue tool is linked to other project management tools. That is, the project manager may access another project manager tool using the check queue tool. For example, the project manager may access the project selector by clicking on any one of the channels shown in Fig. 46, such as the "88HIPHOP.COM" channel. Also, the project manager may access the project work type editor by clicking on any one of the due dates delineated in Fig. 46.

The project manager may use the "view projects with comments" tool to communicate with the project members. The project manager may request a status from a project member or respond to a project member's comment. Any project member may use the "view projects with comments" to post or send comments to the project manager or other members of the project. Comments may comprise status reports, replies to previous comments, inquiries, etc.

### Project Browsing Tool

An operator with an appropriate level of access, such as a project member, may login to the system to access the project browsing tool (not shown). After logging in, the project member can obtain a list and description of all of the project member's projects. The project browsing tool is a non-interactive (read only) viewing tool. In other words, the project browsing tool is a "stripped down" version of the check queue tool of Fig. 46. Unlike the check queue tool, the project browsing tool is not linked to any project management tool.

### Advertising Sales and Management Tools

An individual with an appropriate level of access, such as an advertising manager, a channel producer and a show producer, may login to the system to access the "advertising sales and management" tools. After successfully logging in, the system presents the advertising manager with a menu of the advertising sales and management tools. In one embodiment, the advertising sales and management tools include an "advertising sales" tool for filling advertising inventory based on the client's criteria, and an "advertising management" tool for scheduling advertisement in a predetermined advertising break within a live streaming media presentation, i.e., a predefined advertising block in the show. The advertisement may either be scheduled on a periodic (i.e., weekly, daily or hourly) basis or using other criteria. A predefined class of operators, i.e., advertising sales personnel, may be given a partial access to the advertising sales and management tools. For example, the advertising sales personnel may access the advertising sales tool, but not the advertising management tool.

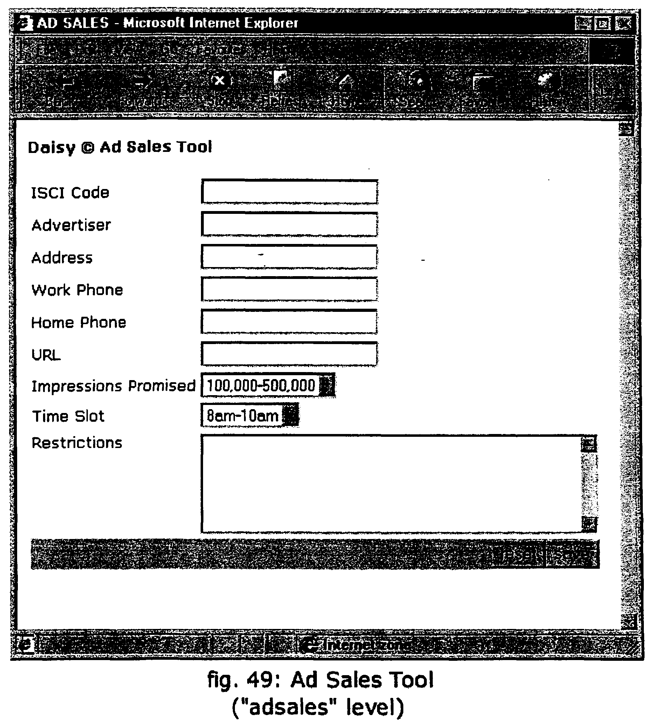

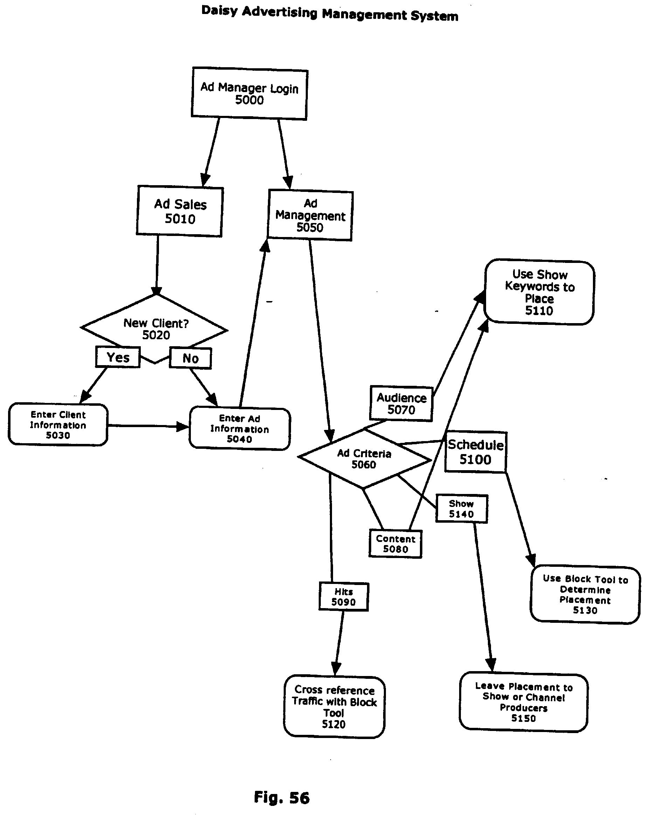

The operation of the advertising sales and management tools is described in conjunction with the flow chart of Fig. 56. After logging in as an advertising manager at step 5000, the system presents the advertising manager with a menu of the advertising sales and management tools (not shown). If the advertising manager selects the advertising sales tool, then the system presents the advertising sales tool screen of Fig. 49 to the advertising manager at step 5010.

An inquiry is made at step 5020 to determine if the advertiser is a new client. If the inquiry at step 5020 is answered in the affirmative, the advertising manager enters client information for the new advertiser at step 5030. The client information may include client's name, address, phone number, email address, etc. If the inquiry at step 5020 is answered in the negative, the advertising manager proceeds directly to step 5040. At step 5040, the advertising manager enters information regarding the advertisement. The advertisement may be comprised of text, static images, and/or video images with or without audio. Also, the advertising information may include restrictions and scheduling requirements specified by the client, such as the number of impressions promised, the time slot(s) of the advertisement, the demographics of the audience, the channel type (e.g., a musically oriented channel), the appropriate show content or subject matter (e.g., no violence, sex, etc.). The client information and advertising information are stored in the advertising database 150.

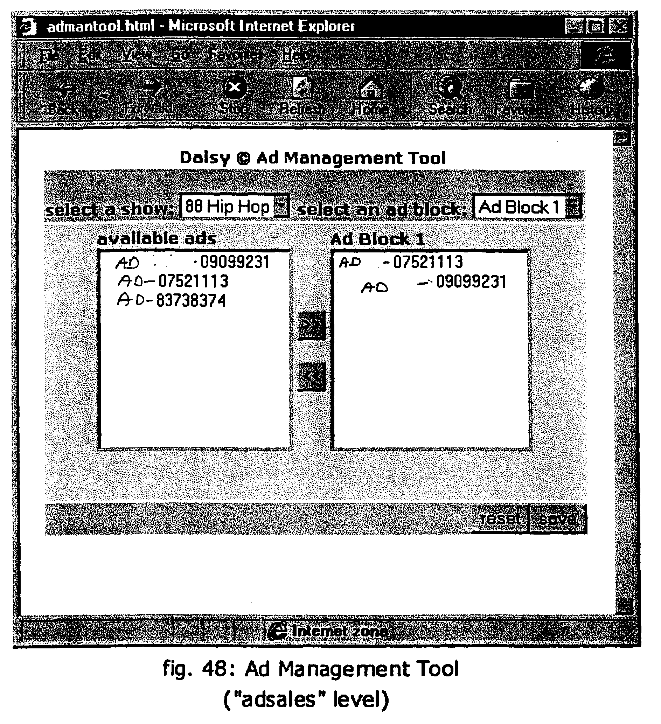

After the advertising information is entered and stored in the advertising database 150 as an advertising(or advertisement) record, the system presents the advertising management tool screen of Fig. 48 to the advertising manager at step 5050. The advertising manager may proceed directly to step 5050 from step 5000 to schedule the advertisement. The advertising manager schedules or dynamically places the advertisement in a particular show in accordance with the client's advertising criteria. The advertising criteria may include requirements for time slot (scheduling), show content, number of hits, i.e., viewers watching the show, audience demographics, etc.

At step 5060, an inquiry is made to locate shows satisfying all of the requirements of the client's advertising criteria. Keywords may be used to identify content requirements, such as hip-hop, video, technology, music, etc. The keywords may be derived from the client's advertising criteria at step 5080. The administrative server 120 (Fig. 51) searches the content database 190 for shows containing the selected content keywords at step 5110. Preferably, the administrative server 120 searches the show sections and highlights for these content keywords.

Likewise, keywords may be used to identify the audience requirements, such as age, gender, place of residence, etc. Again, the keywords may be generated from the client's advertising criteria at step 5070. The administrative server 120 searches the user database 180 for shows having target audience that matches the audience keywords at step 5110. Alternatively, the administrative server 120 may search the chat groups or bulletin boards for the selected audience keywords. A list of shows is then compiled which satisfy the client's content and audience requirements.

The "hits" requirement may be determined from the client's advertising criteria at step 5090. At step 5120, any show having an audience size below the client's hits requirements is removed from the show list. The logging system collects and stores web hits for each show in the show/channel database 170 and the administrative server 120 accesses these records to obtain the appropriate traffic data.

The scheduling requirements of the advertisement may be determined from the advertising criteria at step 5100. The available advertising breaks or blocks of the shows on the show list are then compared to the client's scheduling requirements at step 5130. Any show having no available advertising blocks in the required time slots is removed from the show list at step 5140. In our example, the "Ad Block 1" time slot of Fig. 48 conflicts with the scheduling requirements of the "AD-83738374" advertisement. Therefore, this advertisement cannot be placed in "Ad Block 1" of the "88 Hip Hop" show. This is shown in Fig. 48, where three advertisements are available for the "88 Hip Hop" show, but only two of the three advertisements satisfy the scheduling requirement and may be placed (inserted) in the "Ad Block 1" time slot.

For each advertising block of the show, the show or channel producer may select an advertisement from the list of available advertisements at step 5150. For example, the show producer may select the "AD-07521113" advertisement for the "Ad Block 1" of the "88 Hip Hop" show, as shown in Fig. 48.

### Ancillary Content Creation Tools

As discussed hereinabove, an operator having an appropriate level of access may create, edit and present (i.e., display) ancillary content to accompany a streaming media presentation. That is, the members of the audience (or viewers) can view both the ancillary content and the streaming media presentation simultaneously. The ancillary content may include rotating sequences of images, texts, video, audio, quizzes, games, incentive programs, user identification cards, etc.

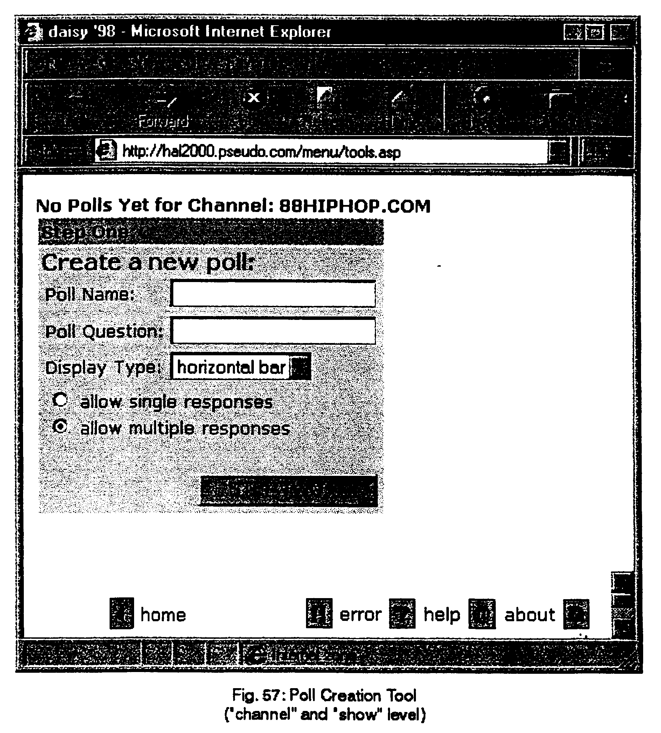

Before ancillary content be displayed with a streaming media presentation, the ancillary content must be created and added to the respective channel's (or show's) list of ancillary content. For example, the ancillary content may consist of a viewer poll. The channel producer may initiate the poll creation process by specifying the poll name and poll question, as shown in Fig. 57. The channel producer may additionally specify the format (display type) of the poll results, such as a horizontal bar, pie chart, vertical bar or the like, and the response type, i.e., whether single or multiple responses are permitted, or whether the poll is a "true or false" poll.

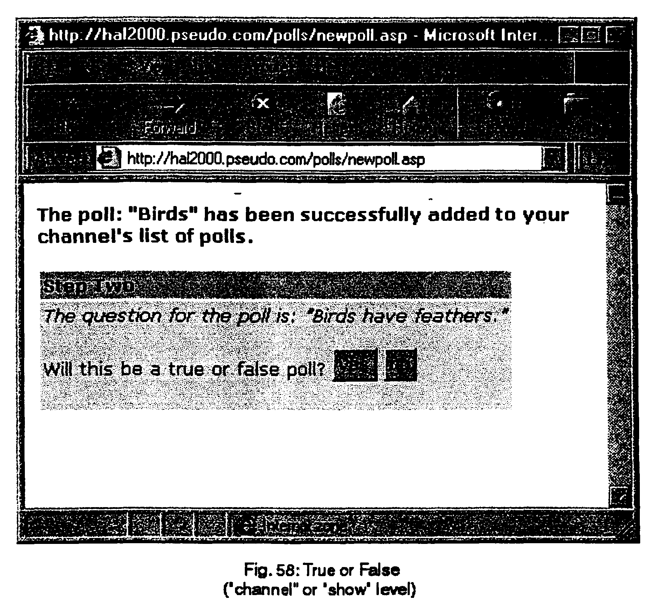

The poll creation tool enters the poll information, such as the poll question, display type, response type and the like, and adds the newly created poll to the channel's list of polls. For example, as shown in Figs. 57 and 58, the poll named "Birds" may be added to the "88HIPHOP.COM" channel's list of polls.

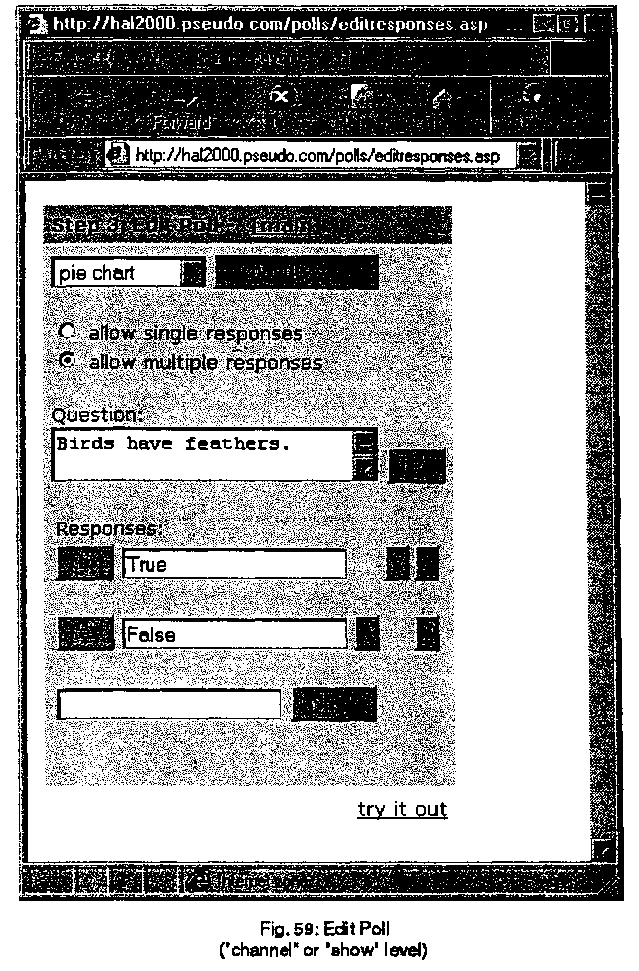

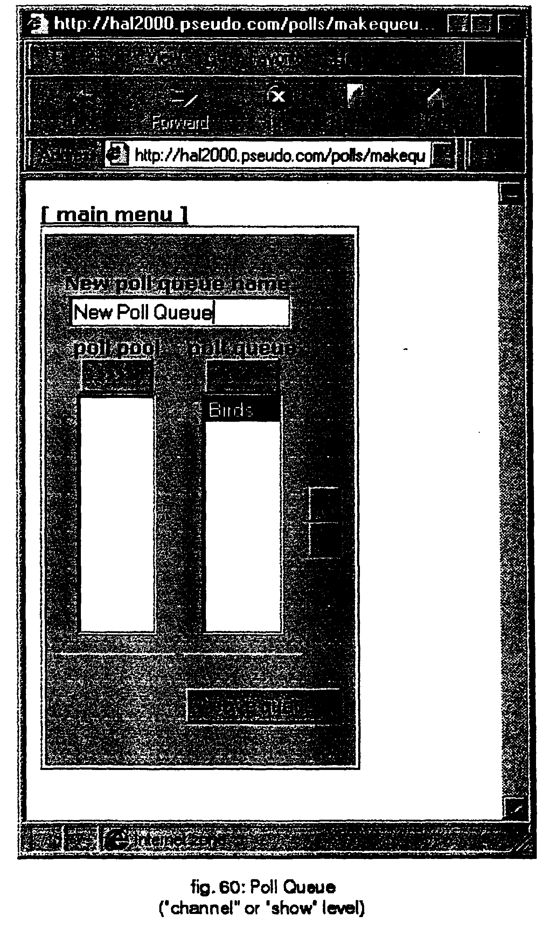

After all of the poll information has been entered, the channel producer may use an edit poll tool, as shown in Fig. 59, to view, verify or edit any of the entered poll information. After the newly created poll has been successfully added to the channel's list of polls, the channel producer may add or place the newly created poll in a poll queue, as shown in Fig. 60. The poll queue permits the channel producer to rotate the presentation of the polls. For example, if there are seven polls in the poll queue, the channel producer may display a different poll on each day of the week. Preferably, the channel producer rotates the display of the seven polls during the presentation of a show such that one poll from the poll queue is always displayed with the presentation of the show. In a preferred embodiment, the poll queue is archived in the show/channel database 170.

Although Figs. 57-60 illustrate only an ancillary content creation tool for creating a poll (a poll creation tool), the operator may use the ancillary content creation tool to create other types of ancillary content, such as rotating sequences of images, texts, HTML-based articles, quizzes, games, incentive programs, etc. Also, the ancillary content may include previously discussed types of media content, such as video, audio, chat discussions ("chat"), highlights, sections, daily briefings, playlists, rundowns, and message/bulletin boards.

Ancillary content presentations ("ancillary presentations") consisting of one or more ancillary content to be displayed in concert with streaming media presentations are archived or stored in the show/channel database 170. Each archived ancillary presentation may be identified and retrieved from the show/channel database 170 based on a presentation name and/or a presentation author.

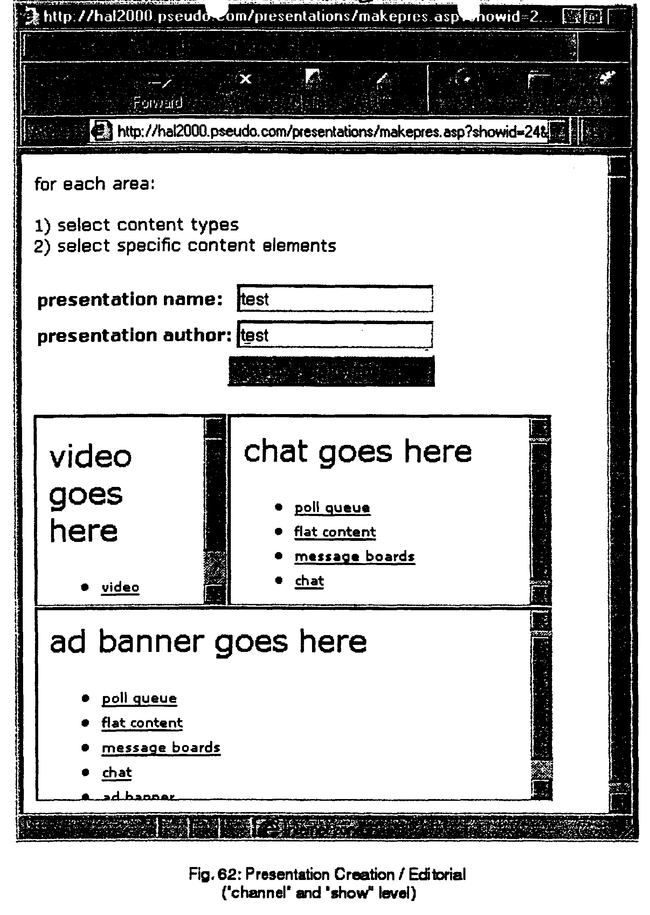

An ancillary presentation may be displayed in an ancillary message display (or a presentation window) representing a browser window, a window within the browser window, or a "frame" within the browser window. Preferably, the ancillary message display which is transmitted to the users browser software is divided into one or more content areas, as shown in Fig. 62. Different content types are displayed in different content areas of the presentation window. For example, as shown in Fig. 62, for each content area, the channel or show producer first selects one of the available content type and then selects specific ancillary content of the selected content type to be displayed. The channel producer may use the ancillary content creation tool (such as the poll creation tool) to select the specific ancillary content of the selected content type. For example, as shown in Fig. 62, the content area located in the upper right hand corner of the ancillary message display is defined as the chat area and only the content elements in the list of available content elements may be displayed, i.e., poll queue, flat content, message boards and chat.

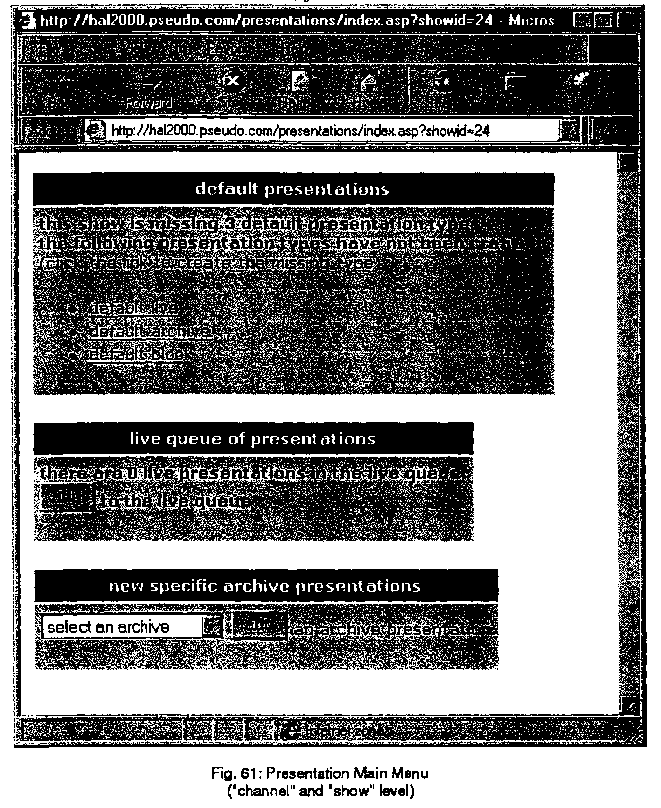

Preferably, one ancillary presentation is designated as a default live ancillary presentation and another as a default archive ancillary presentation to presented in concert with a live and an archived streaming media presentation, respectively. Default live and archive ancillary presentations are designated so that no live or archived streaming media presentation is displayed without an ancillary presentation, the channel producer may override the default and select any other ancillary presentation to be used with a particular streaming media presentation. As shown in Fig. 61, the default live and archive ancillary presentations are preferably linked to the presentation main menu screen to thereby permit the channel or show producer to simply select the underlined term "default live" or "default archive" to access the default live or archive ancillary presentation or to designate another ancillary presentation as the default live or archive ancillary presentation. Alternatively, the default live and/or archive ancillary presentation may represent a queue of ancillary presentations where each ancillary presentation in the queue is displayed for a predetermined period. In other words, one ancillary presentation from the queue is always displayed in concert with the live or archived streaming media presentation.

Similarly, a queue of ancillary presentations is designated as a "default block ancillary" presentation to be presented alongside a 24-hour block of streaming media presentation. Again, the channel producer may override the default and select any other queue of ancillary presentations to be presented in concert with the 24-hour block of streaming media presentation. As shown in Fig. 61, the default block ancillary presentation is also preferably linked to the presentation main menu screen to thereby permit the channel or show producer to simply select the underlined term "default block" to access the default block ancillary presentation or to designate another queue of ancillary presentations as the default block ancillary presentation. Alternatively, the default block ancillary presentation may represent a single ancillary presentation.

### Supervisor Tools

An individual with an appropriate level of access, such as a supervisor, may login to the system to access the supervisor tools. After logging in, the system presents the supervisor with a menu of the supervisor tools. In one embodiment, the supervisor tools includes all of the tools available to the system administrator, except the system administration tools. Preferably, the supervisor tools also includes the channel creation tool for creating and editing a channel.

It will be appreciated that various alterations, modifications and adaptions to the described embodiments may be made based on the present disclosure, and are intended to be within the scope of the present invention. For example, all of the databases 150-190 may be combined into a single database. Also, other classes (or groups) of tools may be derived from any subset of the tools available to the system administrator. It is intended that the appended claims be interpreted as including the embodiments discussed above, those various alternatives which have been described and all equivalents thereto.

## Claims

1. A system for providing interactive entertainment over a communications network to an audience, comprising:
transmission means for delivering a live media presentation to the audience over the communications network;
receiving means for receiving communications from the audience over the communications network while said live media presentation is being delivered to the audience; whereby at least some of the communications received from the audience during the live media presentation are used to determine the content of the live media presentation.

2. The system of claim 1, wherein said transmission means is operable to deliver an ancillary message display to members of the audience, said message display for displaying at least some of the communications received from the audience.

3. The system of claim 2, wherein said message display comprises a bulletin board or chat group.

4. The system of claim 2, wherein said message display is transmitted with said live media presentation, such that members of the audience can view both said message display and said live media presentation simultaneously.

5. The system of claim 2, wherein said message display includes a password for limiting access to said message display.

6. The system of claim 1, wherein said transmission means is operable to deliver a plurality of live media presentations, each live media presentation being delivered to the audience on a separate channel over the communications network.

7. The system of claim 1, further comprising means for receiving media content from the audience and displaying said media content during said live media presentation.

8. The system of claim 7, further comprising storage means for archiving said live media presentation, and said communications and said media content from the audience.

9. A method of providing interactive entertainment over a communications network to an audience, comprising the steps of:
transmitting a live media presentation to the audience over the communications network;
receiving communications from the audience over the communications network while said live media presentation is being made; and
using at least some of the communications received from the audience to determine the content of said live media presentation.

10. The method of claim 9, further comprising the step of providing a message display area for members of the audience to communicate with each other and with individuals responsible for controlling the content of said live media presentation.

11. The method of claim 10, wherein said message display area comprises a bulletin board or chat group.

12. The method of claim 10, wherein said message display is transmitted with said live media presentation, such that members of the audience can view both said message display and said live media presentation simultaneously.

13. The method of claim 10, wherein said message display area includes a password for limiting to access to said message display area.

14. The method of claim 9, wherein the step of transmitting transmits a plurality of live media presentations, each live media presentation being delivered to the audience on a separate channel over the communications network.

15. The method of claim 9, further comprising the steps of receiving media content from the audience and displaying said media content during said live media presentation.

16. The method of claim 15, further comprising the step of archiving said live media presentation, and said communications and said media content from the audience.

17. A system for remotely providing entertainment production services to independent producers over a global communications network, comprising:
one or more remotely accessible servers linked to the communications network,
access control software for providing a plurality of access levels to a plurality of software tools resident on said one or more servers for creating and presenting media content, some of said access levels being accessible by said independent producers;
wherein said software tools remotely accessible to said independent producers comprise at least one tool for manipulating files resident on at least one of said servers containing media content for use in a show being produced for presentation to an audience over the communications network and at least one tool for scheduling the presentation of shows; and
an encoder for transmitting the files associated with a show to an audience linked to the communications network.

18. The system of claim 17, wherein said software tools include a tool for presenting a live, streaming media show.

19. The system of claim 18, wherein said software tools further comprising a tool for creating ancillary content to be simultaneously presented along with said live, streaming media show.

20. The system of claim 17, wherein said software tools include a tool remotely accessible to a user for registering as an independent producer.

21. The system of claim 20, wherein said access control software is operable to assign an access level to said user in accordance with user's profile information.

22. A method for remotely providing entertainment production services to independent producers over a global communications network, comprising the steps of:
providing a plurality of access levels to a plurality of software tools resident on one or more remotely accessible servers for creating and presenting media content, some of said access levels being accessible by said independent producers;
wherein said one or more servers are linked to the communications network, and said software tools remotely accessible to said independent producers comprise at least one tool for manipulating files resident on at least one of said servers containing media content for use in a show being produced for presentation to an audience over the communications network and at least one tool for scheduling the presentation of shows; and
transmitting the files associated with a show to an audience linked to the communications network.

23. The method of claim 22, wherein said software tools include a tool for presenting a live, streaming media show.

24. The method of claim 23, wherein said software tools further comprising a tool for creating ancillary content to be simultaneously presented along with said live, streaming media show.

25. The method of claim 22, wherein said software tools include a tool remotely accessible to a user for registering as an independent producer.

26. The method of claim 25, further comprising the step of assigning an access level to said user in accordance with user's profile information.

27. A system for presenting entertainment over a communications network, comprising:
a computer linked to the communications network for transmitting streaming media presentations to an audience linked to the communications network;
a database for maintaining information about the audience receiving said streaming media presentations;
a software tool for maintaining a plurality of advertisements to be inserted into said streaming media presentations transmitted by said computer, and for maintaining a set of audience selection criteria associated with at least some of said advertisements;
a software tool for selecting and inserting advertisements into said streaming media presentations, at least some of said advertisements being selected for insertion based on said audience selection criteria.

28. The system of claim 27, further comprising a software tool for collecting statistical information about the audience.

29. A method for presenting entertainment over a communications network, comprising the steps of:
transmitting streaming media presentations to an audience linked to the communications network;
maintaining information about the audience receiving said streaming media presentations;
maintaining a plurality of advertisements to be inserted into said streaming media presentations;
maintaining a set of audience selection criteria associated with at least some of said advertisements;
selecting and inserting advertisements into said streaming media presentations, at least some of said advertisements being selected for insertion based on said audience selection criteria.

30. The method of claim 29, further comprising the step of collecting statistical information about the audience.
